(19) 
**Europäisches Patentamt**
**European Patent Office**
**Office européen des brevets**

(11) **EP 2 141 931 A1**

(12) **EUROPEAN PATENT APPLICATION**
published in accordance with Art. 153(4) EPC

(43) Date of publication:
**06.01.2010 Bulletin 2010/01**

(51) Int Cl.:
***H04N 7/32*** (2006.01)

(21) Application number: **08751578.9**

(22) Date of filing: **18.04.2008**

(86) International application number:
**PCT/JP2008/001034**

(87) International publication number:
**WO 2008/132828 (06.11.2008 Gazette 2008/45)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **19.04.2007 EP 07007994**

(71) Applicant: **Panasonic Corporation**
**Kadoma-shi**
**Osaka 571-8501 (JP)**

(72) Inventors:
- **WITTMANN, Steffen**
  **63225 Langen (DE)**
- **WEDI, Thomas**
  **63225 Langen (DE)**

(74) Representative: **Grünecker, Kinkeldey, Stockmair & Schwanhäusser Anwaltssozietät Leopoldstrasse 4 80802 München (DE)**

(54) **TWO-DIMENSIONAL ADAPTIVE INTERPOLATION FILTER COEFFICIENT DECISION METHOD**

(57) A method for efficiently determining an appropriate filter coefficient of a two-dimensional adaptive interpolation filter with less calculation, the method including: a motion estimating step (S100) of estimating at sub-pel resolution, for each of blocks constituting a current picture, a motion of an image of the block from a reference picture as a motion vector; an identifying step (S102) of identifying at least one block having a motion vector specifying a sub-pel position (p, q) on the reference picture from among the blocks having motion vectors estimated at sub-pel resolution; and a determining step (S104) of determining a filter coefficient of the sub-pel position (p, q) based on an image of the at least one block identified in the identifying step and an image of at least one block of the reference picture specified by the motion vector of the at least one block identified in the identifying step.

FIG. 8

## Description

### Technical Field

The present invention relates to a method for video data compression, and in particular to a method for determining a filter coefficient of an adaptive interpolation filter used for motion compensation.

### Background Art

Video data is being adopted in increasing numbers of applications, ranging from video-telephoning and video-conferencing to Digital Versatile Disk (DVD) and digital television. When video data is being transmitted or recorded, a substantial amount of data has to be sent through conventional transmission channels of limited bandwidth or has to be stored on conventional storage media of limited capacity. In order to transmit and store digital data on conventional channels and media, it is necessary to compress or reduce the volume of digital data.

For the compression of video data, a plurality of video coding standards has been developed. Such video standards are, for instance, ITU-T standards denoted with H.26x and ISO/IEC standards denoted with MPEG-x. The most up-to-date and advanced video coding standard is currently the standard denoted as H.264/MPEG-4 AVC.

The coding approach underlying most of these standards consists of the following main stages (a) to (d):

(a) Dividing each individual video frame into two-dimensional blocks of pixels in order to subject each video frame to data compression at a block level.
(b) Decorrelating spatiotemporal video information by applying a temporal prediction scheme to each block and by transforming the residual prediction error from the spatial domain into the frequency domain.
(c) Reducing the overall amount of data by quantizing the resulting transform coefficients.
(d) Compressing the remaining data by entropy coding the quantized transform coefficients.

The temporal prediction scheme employed by most state-of-the-art video coding standards is motion compensation. In this prediction scheme, one or more motion vectors are determined for each block of video data in order to describe image displacements caused by object and/or camera movements. Based on the motion vectors determined, the image content of one block is predicted at least to a certain extent from the image content of previously coded blocks. The remaining discrepancy between the predicted image content and the actual image content is called the prediction error, which is then coded together with the motion vectors rather than the actual image content. In this manner, a substantial reduction in the amount of information to be coded can be achieved for most "natural" video sequences.

Obviously, compression efficiency depends critically on the accuracy of motion estimation. Modern video coding standards such as H.264/AVC thus allow for motion vectors with sub-pel resolution. That is to say, motion vectors are not restricted to integer values relative to pixel positions but may also point to a position between two pixels. Usually, motion vectors are determined at half-pel or quarter-pel resolution. In such a case, a video resolution is twice or four times as large as the original video resolution. Since motion vectors with sub-pel resolution may refer to positions in the reference image, which are located between the sampled positions, interpolation is needed in order to compute the predicted image. Generally, a predetermined interpolation filter is employed for computing the required sub-pixel values.

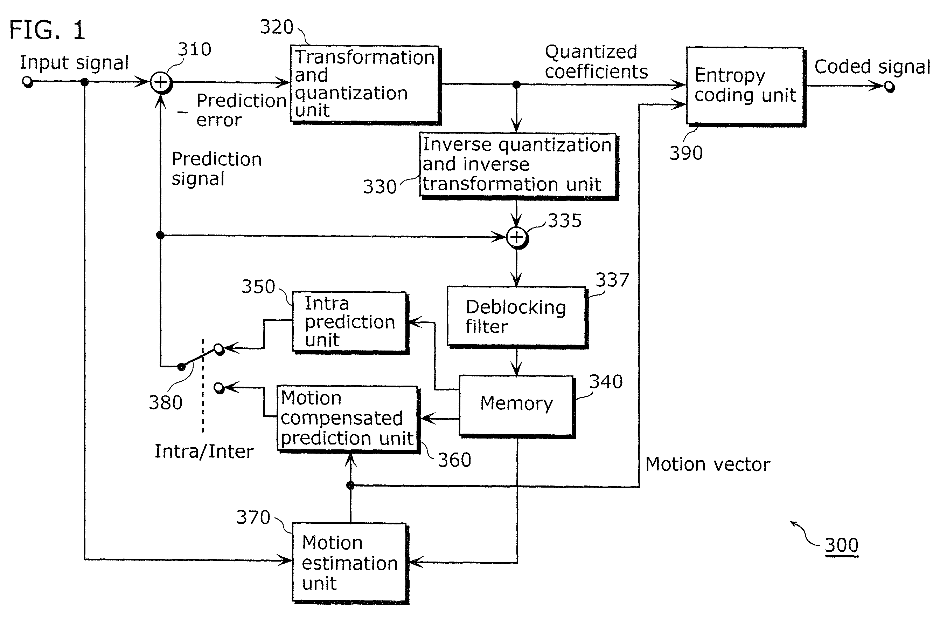

FIG. 1 is a block diagram showing an example of a video coding apparatus in accordance with H.264/AVC.

A video coding apparatus 300 performs motion compensation at sub-pel resolution using a two-dimensional interpolation filter with fixed filter coefficients. The video coding apparatus 300 includes a subtractor 310 which determines a difference between a current block of an input image (input signal) and a prediction signal based on the current block and a previously coded and decoded block (prediction signal) stored in a memory 340. To be more specific, the input image is divided into macroblocks in accordance with the H.264/AVC standard. The video coding apparatus 300 employs a Differential Pulse Code Modulation (DPCM) approach of transmitting a difference between a current block of an input video sequence (input image) and a prediction signal that is predicted based on a previously coded and decode block (locally decoded image). This difference is determined in the subtractor 310, which receives the current block to be coded and subtracts the prediction signal therefrom.

The locally decoded image is provided by a decoding unit (an inverse quantization and inverse transformation unit 330, an adder 335, and a deblocking filter 337) incorporated into the video coding apparatus 300. The decoding unit performs the coding steps in reverse manner. In other words, the inverse quantization and inverse transformation unit 330 dequantizes the quantized coefficients and applies inverse transformation to the dequantized coefficients. The adder 335 adds the decoded differences to the prediction signal to form the locally decoded image. Further, the deblocking filter 337 reduces blocking artifacts in the decoded image.

The type of prediction employed by the video coding apparatus 300 depends on whether the macroblocks are coded in "Intra" or "Inter" mode. In "Intra" mode, the video coding standard H.264/AVC uses a prediction scheme based on already coded macroblocks of the same image in order to predict subsequent macroblocks. In "Inter" mode, motion compensated prediction between corresponding blocks of several consecutive frames is employed.

Only intra-coded images (I-type images) can be decoded without reference to any previously decoded image. The I-type images provide error resilience for the coded video sequence. Further, entry points into bit streams of coded data are provided by the I-type images in order to enable a random access, i.e. to access I-type images within the sequence of coded video images. A switch between intra-mode (processing by an intra prediction unit 350) and inter-mode (processing by a motion compensated prediction unit 360) is controlled by a switch 380.

In "Inter" mode, a macroblock is predicted from corresponding blocks of previous frames by employing motion compensation. The motion estimation is accomplished by a motion estimation unit 370 which receives the current input signal and the locally decoded image. Motion estimation yields two-dimensional motion vectors, representing a pixel displacement between the current block and the corresponding block in previous frames. Based on the estimated motion, the motion compensated prediction unit 360 provides a prediction signal.

In order to optimize prediction accuracy, motion vectors are determined at sub-pel resolution (for example, half-pel or quarter-pel resolution). A motion vector with sub-pel resolution points to a position within a previous frame where no pixel value is available (i.e. a sub-pel position). Hence, spatial interpolation of pixel values is needed in order to perform motion compensation. According to the H.264/AVC standard, a 6-tap Wiener interpolation filter with fixed filter coefficients and a bilinear filter is applied in order to obtain pixel values for sub-pel positions.

The interpolation process is performed as follows:

1. The half-pel positions are calculated using the 6-tap filter horizontally and vertically.
2. The quarter-pel positions are calculated through bilinear filtering applying the already computed half-pel values as well as the existing full-pel values.

As the filter coefficients are fixed and therefore known by the video decoding apparatus, no overhead data is necessary to transmit the filter coefficients to the video decoding apparatus.

For both the "Intra" and the "Inter" coding modes, the differences between the current block and the prediction signal are transformed into transform coefficients by a transformation and quantization unit 320. Generally, an orthogonal transformation such as a two-dimensional discrete cosine transformation (DCT) or an integer version thereof is employed.

The transform coefficients are quantized in order to reduce the amount of data that has to be coded. The step of quantization is controlled by quantization tables that specify the precision and the number of bits that are used to code each frequency coefficient. Lower frequency components are usually more important for image quality than fine details so that more bits are spent for coding the low frequency components than for the higher ones.

The two-dimensional array of quantized coefficients is converted into a one-dimensional string to pass it to an entropy coding unit 390. This conversion is performed by scanning the array in a predetermined sequence. The thus obtained one-dimensional sequence of quantized coefficients is compressed to a sequence of number pairs called run levels. Finally, the run-level sequence is coded with binary code words of variable length (Variable Length Code (VLC)). The code is optimized to assign shorter code words to most frequent run-level pairs occurring in typical video images. The resulting bit stream is multiplexed with the motion information and stored on a recording medium or transmitted to the video decoding apparatus side.

For reconstructing the coded images, the video decoding apparatus performs the coding process in reverse manner.

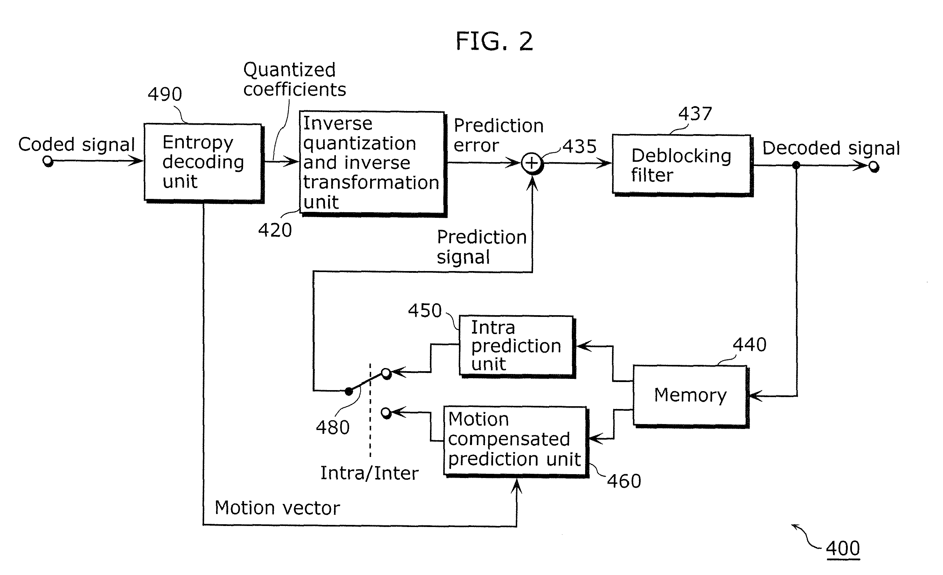

FIG. 2 is a block diagram showing an example of a video decoding apparatus in accordance with H.264/AVC.

In a video decoding apparatus 400, first, an entropy decoding unit 490 performs entropy decoding on quantized coefficients and a motion vector which have been entropy-coded. This step also involves an inverse scanning in order to place the sequence of the entropy-decoded quantized coefficients in a two-dimensional block as it is required for the inverse transformation. The decoded block of quantized coefficients is then submitted to an inverse quantization and inverse transformation unit 420 and the decoded motion data is sent to a motion compensated prediction unit 460. Depending on the actual value of the motion vector, interpolation of pixel values becomes necessary in order to perform motion compensation. The result of the inverse quantization and inverse transformation contains prediction errors and is added by an adder 435 to the prediction signal stemming from the motion compensated prediction unit 460 in inter-mode or stemming from an intra prediction unit 450 in intra-mode. Then, the reconstructed image is processed by a deblocking filter 437 and the resulting signal is stored in a memory 440 to be applied to the intra prediction unit 450 and the motion compensated prediction unit 460.

For a standard following the H.264/AVC, an item currently under review for further improvements in the prediction accuracy and compression efficiency is replacement of predetermined interpolation filters (two-dimensional fixed interpolation filters) by two-dimensional adaptive interpolation filters that are specifically adapted to statistical properties of a current video image to be processed. That is to say, coding efficiency critically depends on prediction accuracy, which in turn depends on the accuracy of motion estimation and motion compensation. Thus, coding efficiency can be improved by replacing the two-dimensional fixed interpolation filters applied for motion compensation with two-dimensional adaptive interpolation filters that adapt to the statistical properties of the video images. In addition, aliasing artifacts and camera noise can be reduced that are peculiar to the video image data to be compressed.

Generally, two-dimensional adaptive interpolation filters for image processing are classified as being either separable or non-separable. Separable two-dimensional adaptive interpolation filters are separated into two one-dimensional filters. Consecutive application of the two one-dimensional filters is equivalent to applying the original two-dimensional adaptive interpolation filter. For non-separable two-dimensional interpolation filters, no such one-dimensional filters can be found.

Separable two-dimensional adaptive interpolation filters are advantageous in the sense that their application to an image is computationally less expensive due to the reduced number of coefficients compared with non-separable two-dimensional adaptive interpolation filters. In the case of the non-separable one, a 6x6-tap two-dimensional filter, for instance, has a total of 36 coefficients, whereas, in the case of the separable one, the two one-dimensional filters have a total of only 6+6 coefficients.

Non-Patent References 1 and 2, for example, disclose a method for determining filter coefficients of such separable two-dimensional adaptive interpolation filters. With the method of Non-Patent References 1 and 2, filter coefficients of a one-dimensional horizontal filter and of a one-dimensional vertical filter are determined in such a manner that the error between a predicted image and a current image is minimized.

Non-Patent Reference 1: Kimata H. et al "3D adaptive motion vector coding integrated with block-based adaptive interpolation filter"

Non-Patent Reference 2: Wedi, Thomas "Advanced motion compensated prediction methods"

**Disclosure of Invention**

**Problems that Invention is to Solve**

However, even the above conventional method for determining a filter coefficient of a separable two-dimensional adaptive interpolation filter has a problem that there is a great number of calculations required for determining a filter coefficient. More specifically, the above conventional method for determining a filter coefficient involves a great number of calculations as a filter coefficient is determined in such a manner that an error between a predicted image and a current image (current block) is minimized with the entire picture including the current image taken into account.

The present invention has been conceived in view of the above problem, and it is an object of the present invention to provide a method for determining a filter coefficient of a two-dimensional adaptive interpolation filter that allows efficient determination of appropriate filter coefficients with less calculation.

**Means to Solve the Problems**

In order to achieve the object, the method for determining a filter coefficient of a two-dimensional adaptive interpolation filter according to the present invention is a method for determining a filter coefficient of a two-dimensional adaptive interpolation filter which is used for calculating a pixel value of a sub pixel to be interpolated between full pixels in a two-dimensional array, based on pixel values of the full pixels, the method including: a motion estimating step of estimating at sub-pel resolution, for each of blocks constituting a current picture, a motion of an image of the block from a reference picture as a motion vector; a first identifying step of identifying at least one block having a first motion vector specifying a sub-pel position on the reference picture from among the blocks having motion vectors with sub-pel resolution estimated in the motion estimating step, the sub-pel position having a predetermined relative positional relationship with a neighboring full pixel; and a first determining step of determining a filter coefficient of the sub-pel position based on an image of the at least one block identified in the first identifying step and an image of at least one block of the reference picture specified by the first motion vector of the at least one block identified in the first identifying step.

For example, when a sub-pel position having a predetermined relative positional relationship with a neighboring full pixel is a position (p, q), plural blocks having the first motion vector specifying the sub-pel position (p, q) on the reference picture are identified from the current picture. It is to be noted that the position (p, q) indicates a position in a range surrounded by four full pixels adjacent to each other, that is, a position on a local coordinate. Then, a filter coefficient corresponding to the sub-pel position (p, q) is determined based on the identified plural blocks. In such a manner, in the present invention, the blocks each having the motion vector specifying the sub-pel position (p, q) are identified from among all the blocks constituting the current picture, and the filter coefficient of the sub-pel position (p, q) is determined based only on the identified blocks. Therefore, assuming that the motion vectors of all the blocks constituting the current picture specify various sub-pel positions of the reference picture, the filter coefficient of the sub-pel position (p, q) is not determined based on images of all of the blocks. This allows significant reduction in the number of calculations required for filter coefficient determination, and thus efficient determination of appropriate filter coefficients can be achieved. In addition, in the present invention, a motion vector is detected at sub-pel resolution before determining a filter coefficient, thereby eliminating the need to detect a motion vector at sub-pel resolution after determining the filter coefficient, and thus the processing load can be reduced. It is to be noted that the above-mentioned reference picture may be more than a single reference picture. For example, it may be plural reference pictures or a slice included in a picture. Further, in the first determining step, a filter coefficient of a sub-pel position is determined in such a manner that a sum of square differences, for example, is minimized between images of the identified blocks of the current picture and images of the blocks of the reference picture specified by the motion vectors of the respective blocks.

It may be that the two-dimensional adaptive interpolation filter is separable into: a first one-dimensional interpolation filter used for calculating a pixel value of a sub pixel to be interpolated at a sub-pel position between pixels that are one-dimensionally arranged in a first direction, the first direction being one of a horizontal direction and a vertical direction; and a second one-dimensional interpolation filter used for calculating a pixel value of a sub pixel to be interpolated at a sub-pel position between pixels that are one-dimensionally arranged in a second direction, the second direction being one of the horizontal direction and the vertical direction other than the first direction, in the first identifying step, at least one block having the first motion vector specifying a first sub-pel position is identified, the first sub-pel position satisfying the predetermined relative positional relationship and being located at a sub-pel position in the first direction and at a full-pel position in the second direction, in the first determining step, a filter coefficient of the first one-dimensional interpolation filter is determined for the first sub-pel position, and the method for determining a filter coefficient further includes: a second identifying step of identifying at least one block having a second motion vector specifying a second sub-pel position on the reference picture from among the blocks having the motion vectors with sub-pel resolution estimated in the motion estimating step, the second sub-pel position having another predetermined relative positional relationship with a neighboring full pixel and being located at a sub-pel position in the second direction; and a second determining step of determining a filter coefficient of the second one-dimensional interpolation filter for the second sub-pel position based on an image of the at least one block identified in the second identifying step and an image of at least one block of the reference picture specified by the second motion vector of the at least one block identified in the second identifying step.

This allows further reduction in the number of calculations required for the filter coefficient determination, because the filter coefficients of the two-dimensional adaptive interpolation filter are determined separately for the first and second one-dimensional interpolation filters. Further, the first identifying step and the first determining step determine, for example, a filter coefficient of a one-dimensional horizontal interpolation filter corresponding to a first sub-pel position $(p, 0)$, and the second identifying step and the second determining step determine, for example, a filter coefficient of a one-dimensional vertical interpolation filter corresponding to a second sub-pel position $(p, q)$ (where $q \neq 0$). This, as a result, allows efficient determination of appropriate filter coefficients of the first sub-pel position $(p, 0)$ and the second sub-pel position $(p, q)$ with less calculation. It is to be noted, for example, that in the case of quarter-pel resolution, changing p to be $p = 1, ..., 3$ allows calculation of filter coefficients of all the first sub-pel positions $(p, 0)$, and changing p to be $p = 0, ..., 3$ and q to be $q = 1, ..., 3$ allows calculation of filter coefficients of all the second sub-pel positions $(p, q)$.

For example, in the second identifying step, at least one block having the second motion vector specifying the second sub-pel position is identified, the second sub-pel position satisfying the other predetermined relative positional relationship and being located at a full-pel position in the first direction and at a sub-pel position in the second direction.

This allows calculation of a filter coefficient of a second sub-pel position $(0, q)$ (where $q \neq 0$). Further, changing q to be $q = 1, ..., 3$ in the case of quarter-pel resolution, for example, allows calculation of filter coefficients of all the second sub-pel positions $(0, q)$ which are located at full-pel positions in the first direction.

Further in the second identifying step, at least one block having the second motion vector specifying the second sub-pel position is identified, the second sub-pel position satisfying the other predetermined relative positional relationship and being located at a sub-pel position in the first and second directions, and in the second determining step, the filter coefficient of the first one-dimensional interpolation filter determined in the first determining step is applied to the first sub-pel position, and a result of the application is used to determine a filter coefficient of the second sub-pel position.

This allows calculation of a filter coefficient of the second sub-pel position $(p, q)$ (where $p \neq 0$ and $q \neq 0$). Further, changing p to be $p = 1, ..., 3$ and q to be $q = 1, ..., 3$ in the case of quarter-pel resolution, for example, allows calculation of filter coefficients of all the second sub-pel positions $(p, q)$ which are located at sub-pel positions in the first and second directions. Furthermore, at this time, application of the filter coefficient of the first one-dimensional interpolation filter to the first sub-pel position allows calculation of a pixel value of a sub pixel located at the first sub-pel position, and a filter coefficient of the second sub-pel position is determined using the calculated pixel value of the sub pixel.

Further, in the first determining step, the filter coefficient of the sub-pel position may be determined in such a manner that a difference is minimized between the image of the at least one block identified in the first identifying step and the image of the at least one block of the reference picture specified by the first motion vector of the at least one block identified in the first identifying step. For example, in the first determining step, the filter coefficient of the sub-pel position is determined by solving a linear equation that minimizes the difference.

This allows adequate determination of filter coefficients appropriate to the image of the reference picture, that is, filter coefficients that are adaptive to the image of the reference picture. In addition, the use of a linear equation allows further reduction in the number of calculations, and thus efficient determination of appropriate filter coefficients can be achieved.

In addition, the method for video data compression according to the present invention may be a method for video data compression including: a filter coefficient determining step of determining a filter coefficient of a two-dimensional adaptive interpolation filter by performing all the steps of the method for determining a filter coefficient of a two-dimensional adaptive interpolation filter according to the present invention; a motion compensating step of performing motion compensation on, as a current block, a block having a motion vector specifying the sub-pel position so as to generate a predicted image of the current block; and a coding step of coding the filter coefficient determined in the filter coefficient determining step and a difference between the predicted image generated in the motion compensating step and an image of the current block, wherein in the motion compensating step, a pixel value of a sub pixel to be interpolated at the sub-pel position is calculated by applying to the sub-pel position the filter coefficient determined in the filter coefficient determining step, and the predicted image which includes the sub pixel having the calculated pixel value is generated.

With this, since a filter coefficient of a sub-pel position is determined using the above-described filter coefficient determination method, and a predicted image of the current block is generated using the filter coefficient, a predicted image that strongly resembles the image of the current block can be generated with less calculation. As a result, the coding amount for coding the difference between the image of the current block and the predicted image can be efficiently reduced. In addition, since the filter coefficient is also coded, outputting the coded filter coefficient to a decoding apparatus allows the decoding apparatus to appropriately decode the current block by decoding and using the coded filter coefficient.

Further, in the filter coefficient determining step, a filter coefficient of each of sub-pel positions may be determined in such a manner that a filter coefficient identical to a filter coefficient determined for a predetermined sub-pel position is determined for another sub-pel position that is horizontally or vertically symmetrical with the predetermined sub-pel position.

With this, the determination of the filter coefficient for the predetermined sub-pel position allows determination of the filter coefficient for the other sub-pel position at the same time. In addition, since the other sub-pel position is horizontally or vertically symmetrical with the predetermined sub-pel position, an appropriate filter coefficient can be determined also for the other sub-pel position. This, as a result, allows determination of appropriate filter coefficients with further reduction in the number of calculations. Moreover, even when, for example, a motion vector specifying a target sub-pel position, for which a filter coefficient is to be determined, is not detected in the filter coefficient determining step, the filter coefficient of the target sub-pel position can be appropriately determined using a filter coefficient of another sub-pel position that is horizontally or vertically symmetrical with the target sub-pel position.

Further, a filter coefficient of the two-dimensional adaptive interpolation filter for a sub-pel position may include coefficients of plural pixels that horizontally or vertically sandwich the sub-pel position, and in the filter coefficient determining step, a filter coefficient of the sub-pel position may be determined in such a manner that a coefficient of a predetermined pixel among the plural pixels is identical to a coefficient of another pixel that is horizontally or vertically symmetrical with the predetermined pixel with respect to the sub-pel position. For example, in the filter coefficient determining step, a filter coefficient of the sub-pel position is determined in such a manner that the coefficients of the plural pixels are horizontally or vertically symmetrical.

With this, the coefficients corresponding to the plural pixels are horizontally or vertically symmetrical, making it possible to determine appropriate filter coefficients with less calculation.

It is to be noted that the present invention can be realized not only as such filter coefficient determination method and video data compression method, but also as: an apparatus and an integrated circuit that use such methods to determine filter coefficients and compress video; a program for causing a computer to execute the steps of the methods; and a recording medium storing such a program.

**Effects of the Invention**

The two-dimensional adaptive interpolation filter of the present invention produces an advantageous effect of efficiently determining appropriate filter coefficients with less calculation.

**Brief Description of Drawings**

[FIG. 1] FIG. 1 is a block diagram showing an example of a configuration of a conventional video coding apparatus.
[FIG. 2] FIG. 2 is a block diagram showing an example of a configuration of a conventional video coding apparatus.

[FIG. 3] FIG. 3 is a block diagram showing an example of a video coding apparatus in an embodiment of the present invention.

[FIG. 4] FIG. 4 shows sub-pel positions for which filter coefficients are to be calculated in an embodiment of the present invention.

[FIG. 5A] FIG. 5A shows a specific example of a filter coefficient calculated for a sub-pel position in an embodiment of the present invention.

[FIG. 5B] FIG. 5B shows a specific example of a filter coefficient calculated for another sub-pel position in an embodiment of the present invention.

[FIG. 6] FIG. 6 shows a motion vector and sub-pel positions on a reference picture in an embodiment of the present invention.

[FIG. 7] FIG. 7 shows blocks identified in a current picture in an embodiment of the present invention.

[FIG. 8] FIG. 8 is a flowchart showing operations of a motion estimation unit and an adaptive-filter-used motion compensated prediction unit in an embodiment of the present invention.

[FIG. 9] FIG. 9 is a block diagram showing an example of a video decoding apparatus in an embodiment of the present invention.

[FIG. 10] FIG. 10 shows pixel positions and pixel values of a reference picture with quarter-pel resolution in an embodiment of the present invention.

[FIG. 11] FIG. 11 shows sub pixels whose values are to be interpolated by a one-dimensional horizontal interpolation filter and filter coefficients of such sub pixels in an embodiment of the present invention.

[FIG. 12] FIG. 12 shows sub pixels whose values are to be interpolated by a one-dimensional vertical interpolation filter and filter coefficients of such sub pixels in an embodiment of the present invention.

[FIG. 13A] FIG. 13A is a chart comparing the coding efficiency of the present invention and of conventional techniques under a predetermined condition.

[FIG. 13B] FIG. 13B is a chart comparing the coding efficiency of the present invention and of the conventional techniques under another condition.

[FIG. 14] FIG. 14 is a chart comparing the number of calculations required in applying a separable two-dimensional adaptive interpolation filter according to the present invention and a conventional non-separable two-dimensional adaptive interpolation filter.

## Numerical References

| 100 | Video coding apparatus |
| --- | --- |
| 120 | Transformation and quantization unit |
| 130 | Inverse quantization and inverse transformation unit |
| 150 | Intra prediction unit |
| 160 | Adaptive-filter-used motion compensated prediction unit |
| 170 | Motion estimation unit |
| 200 | Video decoding apparatus |
| 220 | Inverse quantization and inverse transformation unit |
| 250 | Intra prediction unit |
| 260 | Adaptive-filter-used motion compensated prediction unit |

## Best Mode for Carrying Out the Invention

Hereinafter, a video coding apparatus (video compression apparatus) in an embodiment of the present invention will be described with reference to the drawings.

The video coding apparatus in the present embodiment efficiently and appropriately calculates filter coefficients of a separable two-dimensional adaptive interpolation filter with less calculation. The video coding apparatus then performs motion compensation using the calculated filter coefficients, which makes it possible, as a result, to efficiently and appropriately code video data.

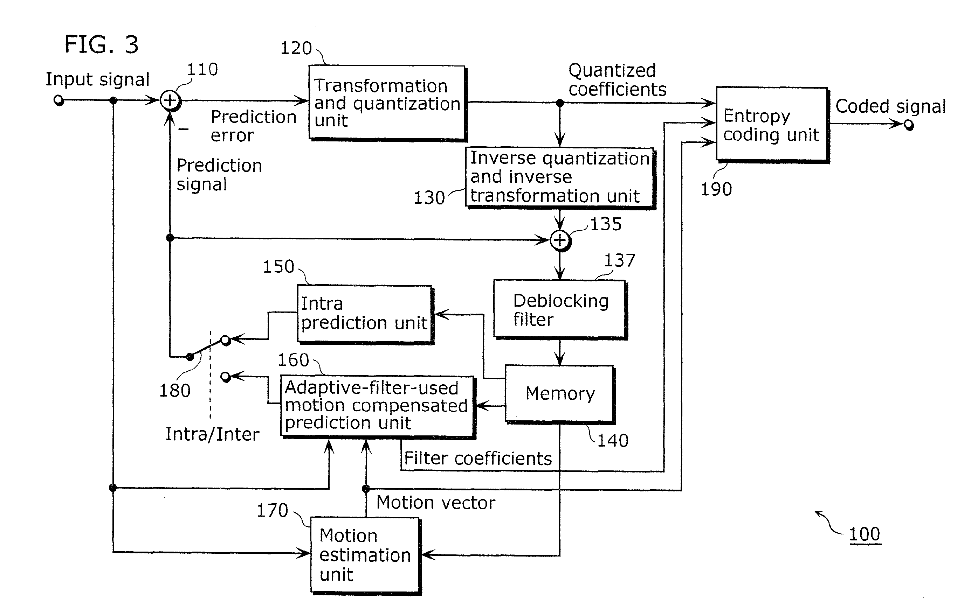

FIG. 3 is a block diagram showing an example of the video coding apparatus in the present embodiment.

A video coding apparatus 100 in the present embodiment includes a subtractor 110, a transformation and quantization unit 120, an inverse quantization and inverse transformation unit 130, an adder 135, a deblocking filter 137, a memory 140, an intra prediction unit 150, an adaptive-filter-used motion compensated prediction unit 160, a motion estimation unit 170, a switch 180, and an entropy coding unit 190.

It is to be noted that the video coding apparatus 100 in the present embodiment has a feature in the motion estimation unit 170 and the adaptive-filter-used motion compensated prediction unit 160. In other words, the subtractor 110, transformation and quantization unit 120, inverse quantization and inverse transformation unit 130, adder 135, deblocking filter 137, memory 140, intra prediction unit 150, and switch 180 have the same functions as the subtractor 310, transformation and quantization unit 320, inverse quantization and inverse transformation unit 330, adder 335, deblocking filter 337, memory 340, intra prediction unit 350, and switch 380 of the conventional video coding apparatus 300, respectively. In the present embodiment, the motion estimation unit 170 and the adaptive-filter-used motion compensated prediction unit 160 constitute a filter coefficient determination apparatus.

The subtractor 110 obtains an input signal indicating video data. The input signal includes a plurality of pictures, and each of these pictures includes a plurality of blocks (macroblocks). To put it differently, the subtractor 110 sequentially obtains the blocks, and handles each block as a current block. The subtractor 110 further obtains, for each current block, a prediction signal provided by the intra prediction unit 150 or the adaptive-filter-used motion compensated prediction unit 160 and indicating a predicted image corresponding to the current block. Then, the subtractor 110 subtracts the predicted image indicated by the prediction signal from the current block so as to generate a prediction error with respect to the current block, and outputs the prediction error to the transformation and quantization unit 120.

The transformation and quantization unit 120 obtains the prediction error from the subtractor 110, and performs orthogonal transformation such as discrete cosine transformation on the prediction error so as to generate orthogonal transform coefficients. Further, the transformation and quantization unit 120 quantizes the orthogonal transform coefficients to generate quantized coefficients, and outputs the quantized coefficients to the inverse quantization and inverse transformation unit 130 and the entropy coding unit 190.

Upon obtaining the quantized coefficients from the transformation and quantization unit 120, the inverse quantization and inverse transformation unit 130 performs inverse quantization on the quantized coefficients to generate orthogonal transform coefficients. Further, the inverse quantization and inverse transformation unit 130 performs inverse orthogonal transformation such as inverse discrete cosine transformation on the orthogonal transform coefficients to generate a prediction error, and outputs the prediction error to the adder 135.

The adder 135 adds up the prediction error obtained from the inverse quantization and inverse transformation unit 130 and the predicted image indicated by the prediction signal obtained from the intra prediction unit 150 or the adaptive-filter-used motion compensated prediction unit 160. The adder 135 then outputs a locally decoded image indicating the above sum to the deblocking filter 137.

The deblocking filter 137 applies a deblocking filter to the locally decoded image to remove coding distortion in the locally decoded image, and stores in the memory 140 the resulting locally decoded image from which the coding distortion has been removed.

Into the memory 140, the deblocking filter 137 sequentially stores locally decoded images. As a result, reference pictures to be used for the generation of predicted images corresponding to subsequent current blocks are stored in the memory 140.

The intra prediction unit 150 performs intra picture prediction (intra prediction) on a current block. More specifically, the intra prediction unit 150 generates a predicted image corresponding to the current block based on some locally decoded images stored in the memory 140, and outputs a prediction signal indicating the predicted image to the switch 180.

The switch 180 outputs the prediction signal obtained from the intra prediction unit 150 to the subtractor 110 when intra picture prediction (intra prediction) is to be performed on the current block, and outputs a prediction signal obtained from the adaptive-filter-used motion compensated prediction unit 160 to the subtractor 110 when inter picture prediction (inter prediction) is to be performed on the current block.

The entropy coding unit 190 obtains the quantized coefficients from the transformation and quantization unit 120, the filter coefficients from the adaptive-filter-used motion compensated prediction unit 160, a motion vector from the motion estimation unit 170, and performs entropy coding on them to generate and output a coded signal which is a bit stream.

The motion estimation unit 170 sequentially obtains blocks included in an input signal, and handles each block as a current block. The motion estimation unit 170 then detects, in a reference picture stored in the memory 140, a block having an image resembling an image indicated by the current block. To be more specific, the motion estimation unit 170 estimates, as a motion vector, a motion in the image of the current block from the reference picture, and outputs the motion vector to the adaptive-filter-used motion compensated prediction unit 160 and the entropy coding unit 190.

Here, the motion estimation unit 170 performs the motion estimation at sub-pel resolution, and outputs a motion vector with sub-pel resolution. To be more specific, the motion estimation unit 170 first converts the pixel resolution of the reference picture from full-pel resolution to sub-pel resolution, and then performs the motion estimation using the reference picture with sub-pel resolution. For such conversion of pixel resolution, the motion estimation unit 170 applies to the reference picture a two-dimensional fixed interpolation filter having predetermined filter coefficients. The two-dimensional fixed interpolation filter is, for example, a 6-tap Wiener interpolation filter with fixed filter coefficients and a bilinear filter, defined by the H.264/AVC standard. Further, sub-pel resolution is half-pel or quarter-pel resolution, for example.

The adaptive-filter-used motion compensated prediction unit 160 sequentially obtains blocks included in a current picture indicated by an input signal, and sequentially obtains from the motion estimation unit 170 motion vectors with sub-pel resolution which correspond to the respective blocks. Based on each block and each motion vector obtained, the adaptive-filter-used motion compensated prediction unit 160 calculates filter coefficients of a separable two-dimensional adaptive interpolation filter applied to a reference picture, and outputs the filter coefficients to the entropy coding unit 190.

In addition, the adaptive-filter-used motion compensated prediction unit 160 performs motion compensation on the current block using the calculated filter coefficients. In other words, the adaptive-filter-used motion compensated prediction unit 160 applies a separable two-dimensional adaptive interpolation filter having the filter coefficients calculated in the above manner, to a block in the reference picture specified by the motion vector of the current block with sub-pel resolution. As a result, the adaptive-filter-used motion compensated prediction unit 160 performs recalculation on the values of sub-pixels included in the block which have been previously calculated by the two-dimensional fixed interpolation filter, so as to obtain the pixel values for which the separable two-dimensional adaptive interpolation filter has been applied. With this, the adaptive-filter-used motion compensated prediction unit 160 generates a predicted image which corresponds to the current block and has sub pixels having the obtained pixel values, and outputs a prediction signal indicating the predicted image to the switch 180.

Here, the filter coefficient calculation and the motion compensation performed by the adaptive-filter-used motion compensated prediction unit 160 in the present embodiment will be described in detail.

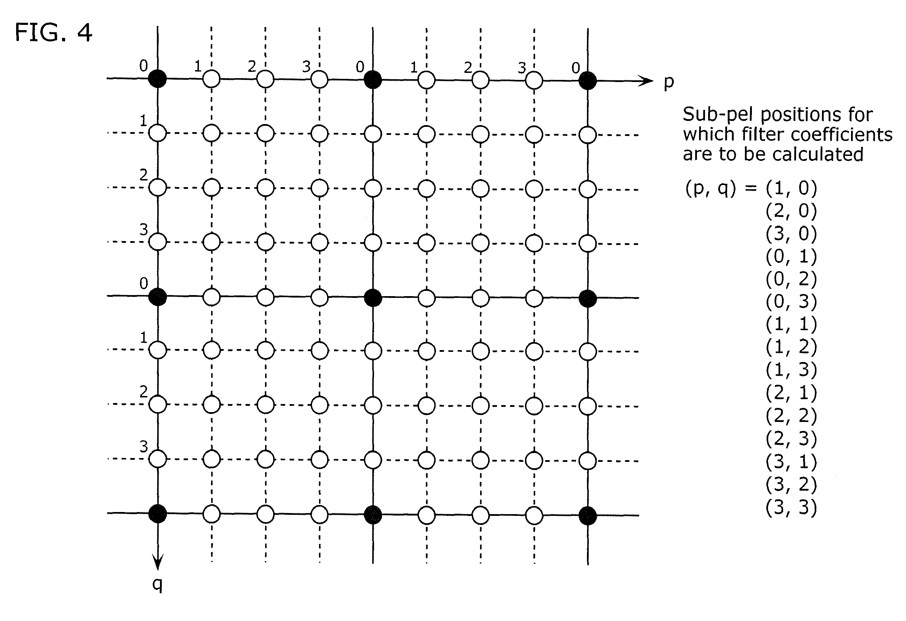

FIG. 4 shows sub-pel positions for which filter coefficients are to be calculated. In FIG. 4, filled circles denote full-pel positions, whereas open circles denote sub-pel positions.

As shown in FIG. 4, the adaptive-filter-used motion compensated prediction unit 160 calculates filter coefficients of 15 sub-pel positions indicated by $(p, q) = (1, 0), (2, 0), (3, 0), (0, 1), (0, 2), (0, 3), (1, 1), (1, 2), (1, 3), (2, 1), (2, 2), (2, 3), (3, 1), (3, 2)$ and $(3, 3)$ in the case of quarter-pel resolution. Here, each position $(p, q)$ indicates a coordinate position within a full-pel range that is the minimum range surrounded by four full pixels. In other words, each position $(p, q)$ indicates a coordinate position that is common to all full-pel ranges on a picture. To put it differently, each position $(p, q)$ indicates a relative positional relationship between a sub-pel position and a neighboring full-pel position $(0, 0)$. More specifically, position p indicates a coordinate position between horizontally arranged full pixels, whereas position q indicates a coordinate position between vertically arranged full pixels. It is to be noted that one full-pel range includes a full pixel located at the position $(p, q) = (0, 0)$ and sub pixels located at the above mentioned 15 sub-pel positions. Further, filter coefficients calculated for the 15 positions are commonly computed for all the full-pel ranges on the same picture, for example. That is to say, plural full-pel ranges have the same sub-pel positions $(p, q)$, and identical filter coefficients are calculated for the same sub-pel positions $(p, q)$.

A filter coefficient calculated for one sub-pel position is expressed as a group of coefficients which are assigned, as weights, to the pixel values of six full pixels, for example.

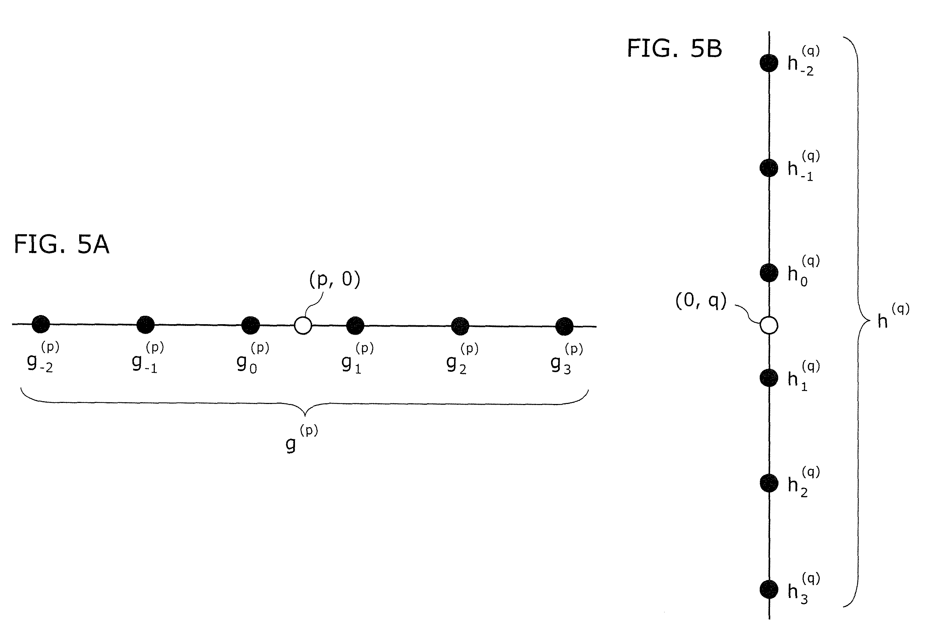

FIGS. 5A and 5B show specific examples of a filter coefficient calculated for a sub-pel position.

As shown in FIG. 5A, the adaptive-filter-used motion compensated prediction unit 160 calculates a filter coefficient $g^{(p)}$ of the one-dimensional horizontal interpolation filter corresponding to the position $(p, 0)$ (where $p \neq 0$) between the horizontally arranged full pixels. Here, the filter coefficient $g^{(p)}$ is calculated as a group of coefficients $g_i^{(p)}$ (where $i = -2, -1, 0, 1, 2, 3$) assigned as weights to the pixel values of, for example, six full pixels that are horizontally arranged with the position $(p, 0)$ located as the approximate center. It is to be noted that the above position $(p, 0)$ (where $p \neq 0$) is located at a sub-pel position in the horizontal direction and at a full-pel position in the vertical direction. Hereinafter, such a position $(p, 0)$ is also referred to as a sub-full-pel position (first sub-pel position).

Further, as shown in FIG. 5B, the adaptive-filter-used motion compensated prediction unit 160 calculates a filter coefficient $h^{(q)}$ of the one-dimensional vertical interpolation filter corresponding to the position $(0, q)$ (where $q \neq 0$) between the vertically arranged full pixels. Here, the filter coefficient $h^{(q)}$ is calculated as a group of coefficients $h_j^{(q)}$ (where $j = -2, -1, 0, 1, 2, 3$) assigned as weights to the pixel values of, for example, six full pixels that are vertically arranged with the position $(0, q)$ located as the approximate center. It is to be noted that the above position $(0, q)$ (where $q \neq 0$) is located at a full-pel position in the horizontal direction and at a sub-pel position in the vertical direction. Hereinafter, such a position $(0, q)$ is also referred to as a full-sub-pel position (second sub-pel position).

Further, the adaptive-filter-used motion compensated prediction unit 160 calculates a filter coefficient $h^{(p,q)}$ of the one-dimensional vertical interpolation filter corresponding to a position $(p, q)$ (where $p \neq 0$ and $q \neq 0$) which is located at neither a sub-full-pel position nor a full-sub-pel position. Here, the filter coefficient $h^{(p,q)}$ of such a sub-pel position is calculated as a group of coefficients assigned as weights to the pixel values of plural sub pixels that are vertically arranged with that sub-pel position located as the approximate center. It is to be noted that the vertically arranged plural sub pixels are located at sub-full-pel positions. Further, the above position $(p, q)$ (where $p \neq 0$ and $q \neq 0$) is located at a sub-pel position in the horizontal and vertical directions. Hereinafter, such a position $(p, q)$ is also referred to as a sub-sub-pel position (second or third sub-pel position).

For example, the adaptive-filter-used motion compensated prediction unit 160 calculates a filter coefficient $h^{(p,q)}$ of the position (p, q) as a group of coefficients $h_j^{(p,q)}$ (where j = -2, -1, 0, 1, 2, 3) assigned as weights to the pixel values of plural sub pixels that are vertically arranged at sub-full-pel positions with the position (p, q) located as the approximate center.

It is to be noted that the above sub-full-pel position, full-sub-pel position, and sub-sub-pel position are sub-pel positions included in the above-described full-pel range. All the full-pel ranges include common sub-pel positions, that is, common sub-full-pel positions, common full-sub-pel position, and common sub-sub-pel positions.

That is to say, the separable two-dimensional adaptive interpolation filter in the present embodiment is separated into a one-dimensional horizontal interpolation filter and a one-dimensional vertical interpolation filter. To calculate a pixel value of a sub pixel located at a sub-full-pel position, the adaptive-filter-used motion compensated prediction unit 160 applies the filter coefficient $g^{(p)}$ of the one-dimensional horizontal interpolation filter to the sub-full-pel position (p, 0). More specifically, as the pixel value of the sub pixel located at the sub-full-pel position, the adaptive-filter-used motion compensated prediction unit 160 calculates a sum of products obtained by multiplying, by the coefficient $g_i^{(p)}$, each of the pixel values of plural full pixels arranged with the sub-full-pel position (p, 0) horizontally sandwiched therebetween. Further, to calculate a pixel value of a sub pixel located at a full-sub-pel position (0, q), the adaptive-filter-used motion compensated prediction unit 160 applies the filter coefficient $h^{(q)}$ of the one-dimensional vertical interpolation filter to the full-sub-pel position (0, q). More specifically, as the pixel value of the sub pixel located at the full-sub-pel position, the adaptive-filter-used motion compensated prediction unit 160 calculates a sum of products obtained by multiplying, by the coefficient $h_j^{(q)}$, each of the pixel values of plural full pixels arranged with the sub-full-pel position (0, q) vertically sandwiched therebetween.

Furthermore, to calculate a pixel value of a sub pixel located at a sub-sub-pel position (p, q) (where p ≠ 0 and q ≠ 0), the adaptive-filter-used motion compensated prediction unit 160 first calculates a pixel value of a sub pixel located at a sub-full-pel position (p, 0) by applying the filter coefficient $g^{(p)}$ of the one-dimensional horizontal interpolation filter to the sub-full-pel position (p, 0), for example. Next, the adaptive-filter-used motion compensated prediction unit 160 applies the filter coefficient $h^{(p,q)}$ of the one-dimensional vertical interpolation filter to the sub-sub-pel position (p, q). More specifically, as the pixel value of the sub pixel located at the sub-sub-pel position, the adaptive-filter-used motion compensated prediction unit 160 calculates a sum of products obtained by multiplying, by the coefficient $h_j^{(p,q)}$, each of the pixel values of the sub pixels located at the plural sub-full-pel positions (p, 0) arranged with the sub-sub-pel position (p, q) vertically sandwiched therebetween.

Here, to calculate such filter coefficients as above of the separable two-dimensional adaptive interpolation filter, the adaptive-filter-used motion compensated prediction unit 160 in the present embodiment first detects in a current picture one or more blocks having a motion vector specifying a predetermined sub-full-pel position in a reference picture, using motion vectors with sub-pel resolution detected for respective blocks included in the current picture. By doing so, a block necessary for calculating a filter coefficient of the sub-full-pel position is identified from the entire current picture.

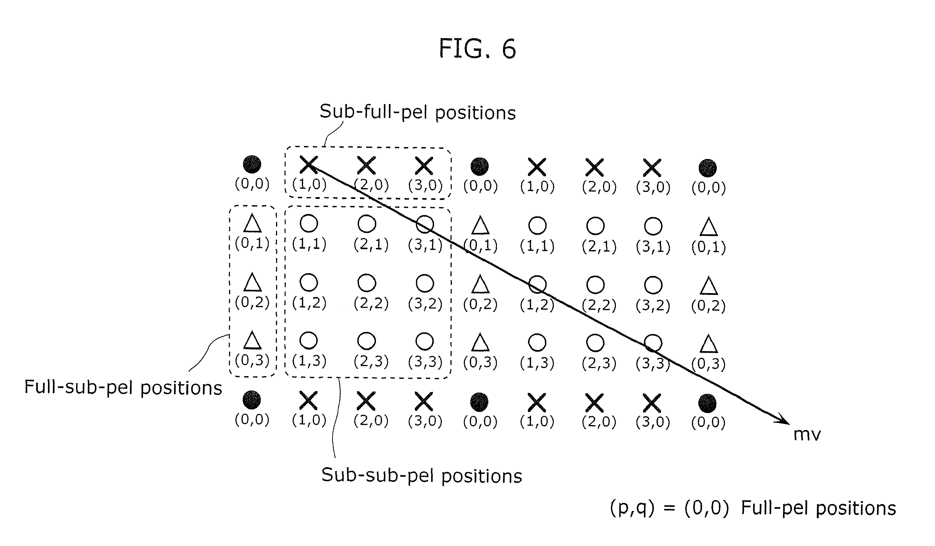

FIG. 6 shows a motion vector and sub-pel positions on a reference picture. It is to be noted that in FIG. 6, crosses denote sub-full-pel positions, triangles denote full-sub-pel positions, and open circles denote sub-sub-pel positions.

For example, the adaptive-filter-used motion compensated prediction unit 160 identifies in a current picture one or more blocks for which a motion vector mv specifying a sub-full-pel position (p, q) = (1, 0) has been detected. Then, the adaptive-filter-used motion compensated prediction unit 160 calculates a filter coefficient of the position (p, q) = (1, 0) using only the specified one or more blocks included in the current picture, without using any other blocks in the current picture.

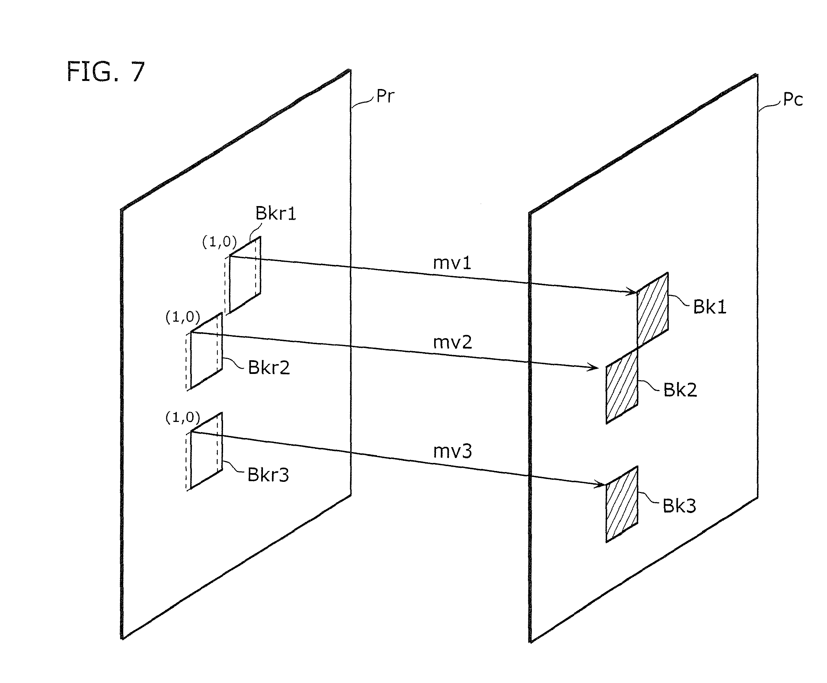

FIG. 7 shows blocks identified in a current picture.

For example, the adaptive-filter-used motion compensated prediction unit 160 identifies in a current picture Pc three blocks Bk1, Bk2, and Bk3 having motion vectors mv1, mv2, and mv3, respectively, which specify the sub-full-pel position (p, q) = (1, 0) in a reference picture Pr. It is to be noted that each of blocks Bkr1, Bkr2, and Bkr3 in the reference picture Pr specified by the motion vectors mv1, mv2, and mv3, respectively, is shifted from a full-pel position by the above sub-full-pel position, that is, by a quarter pixel in the horizontal direction.

The adaptive-filter-used motion compensated prediction unit 160 calculates a filter coefficient of the one-dimensional horizontal interpolation filter corresponding to the sub-full-pel position (p, q) = (1, 0) so that a sum of a difference D1, a difference D2, and a difference D3 (D1 + D2 + D3) is minimized. Here, the difference D1 is a difference between the block Bk1 in the current picture Pc and the block Bkr1 in the reference picture Pr specified by the motion vector mv1 of the block Bk1; the difference D2 is a difference between the block Bk2 in the current picture Pc and the block Bkr2 in the reference picture Pr specified by the motion vector mv2 of the block Bk2; and the difference D3 is a difference between the block Bk3 in the current picture Pc and the block Bkr3 in the reference picture Pr specified by the motion vector mv3 of the block Bk3. To put it differently, the adaptive-filter-used motion compensated prediction unit 160 optimizes the filter coefficient so that the above sum (D1 + D2 + D3) is minimized. It is to be noted that each of the above differences is, for example, a sum of square differences between the pixel values of all the full pixels in a block of the current picture and the pixel values of all the sub pixels in a block of the reference picture corresponding to the full pixels. Furthermore, to optimize the filter coefficient, the adaptive-filter-used motion compensated prediction unit 160 determines a filter coefficient in such a manner that the above difference is minimized, by calculating sub pixel values while changing the filter coefficient as appropriate, for example. Alternatively, the adaptive-filter-used motion compensated prediction unit 160 determines a filter coefficient by solving a later-described linear equation.

After calculating the filter coefficient for the position (p, q) = (1, 0) in such a manner, the adaptive-filter-used motion compensated prediction unit 160 also calculates filter coefficients of the one-dimensional horizontal interpolation filter corresponding to the rest of the sub-full-pel positions, by repeating the above-described processing. That is to say, the adaptive-filter-used motion compensated prediction unit 160 calculates filter coefficients of the positions (p, q) = (2, 0) and (3, 0).

Next, the adaptive-filter-used motion compensated prediction unit 160 in the present embodiment detects in the current picture one or more blocks having a motion vector specifying a predetermined full-sub-pel position in the reference picture. By doing so, a block necessary for calculating a filter coefficient of the predetermined full-sub-pel position is identified from the entire current picture.

For example, the adaptive-filter-used motion compensated prediction unit 160 performs the same optimization as that described above to calculate filter coefficients of the one-dimensional vertical interpolation filter corresponding to the full-sub-pel positions (p, q) = (0, 1), (0, 2), and (0, 3).

In addition, the adaptive-filter-used motion compensated prediction unit 160 in the present embodiment detects in the current picture one or more blocks having a motion vector specifying a sub pixel located at a predetermined sub-sub-pel position in the reference picture. By doing so, a block necessary for calculating a filter coefficient of the predetermined sub-sub-pel position is identified from the entire current picture.

For example, the adaptive-filter-used motion compensated prediction unit 160 performs the same optimization as that described above to calculate filter coefficients of the one-dimensional vertical interpolation filter corresponding to the sub-sub-pel positions (p, q) = (1, 1), (1, 2), (2, 1), (2, 2), (2, 3), (3, 1), (3, 2), and (3, 3). At this time, the adaptive-filter-used motion compensated prediction unit 160 calculates pixel values of pixels located at sub-full-pel positions using the filter coefficients of the sub-full-pel positions calculated earlier. Then, using the calculated pixels values, the adaptive-filter-used motion compensated prediction unit 160 optimizes the filter coefficients of the sub-sub-pel positions.

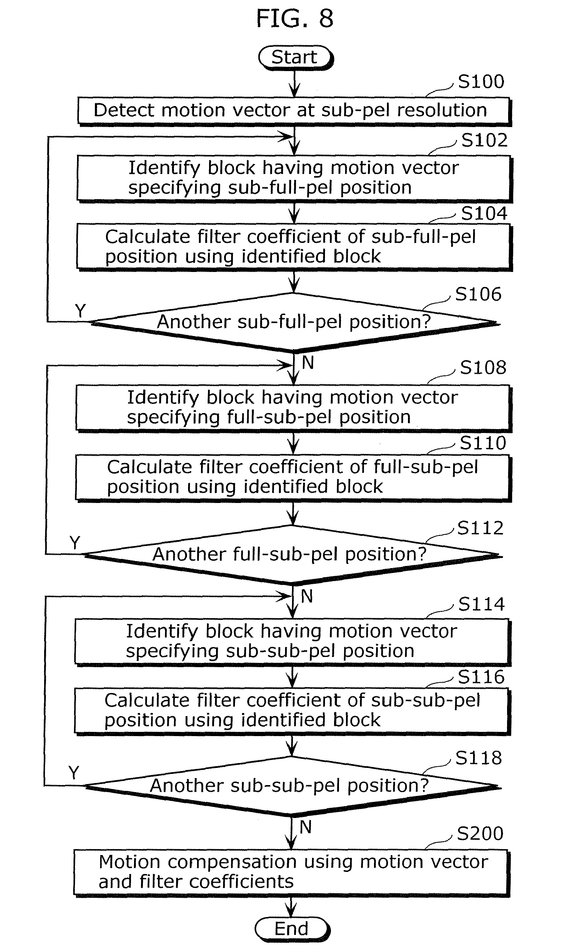

FIG. 8 is a flowchart showing operations of the motion estimation unit 170 and the adaptive-filter-used motion compensated prediction unit 160 in the present embodiment.

Initially, the motion estimation unit 170 detects a motion vector at sub-pel resolution for each block of a current picture, using a two-dimensional fixed interpolation filter (Step S100). Next, the adaptive-filter-used motion compensated prediction unit 160 identifies in the current picture one or more blocks having a motion vector specifying a predetermined sub-full-pel position in a reference picture (Step S102).

The adaptive-filter-used motion compensated prediction unit 160 calculates a filter coefficient of the predetermined sub-full-pel position using, among the blocks included in the current picture, the block(s) identified in Step S102, without using any other blocks in the current picture (Step S104). After calculating the filter coefficient of one sub-full-pel position in the above manner, the adaptive-filter-used motion compensated prediction unit 160 determines whether or not there is another sub-full-pel position for which a filter coefficient has not been calculated yet (Step S106).

Here, when determining that there is another sub-full-pel position for which a filter coefficient has not been calculated yet (Y in Step S106), the adaptive-filter-used motion compensated prediction unit 160 repeats the processing starting from Step S102 on that sub-full-pel position. When determining that there is no other sub-full-pel position for which a filter coefficient has not been calculated yet (N in Step S106), the adaptive-filter-used motion compensated prediction unit 160 identifies in the current picture one or more blocks having a motion vector specifying a predetermined full-sub-pel position in the reference picture (Step S108).

The adaptive-filter-used motion compensated prediction unit 160 calculates a filter coefficient of the predetermined full-sub-pel position using, among the blocks included in the current picture, the block(s) identified in Step S108, without using any other blocks in the current picture (Step S110). After calculating the filter coefficient of one full-sub-pel position in the above manner, the adaptive-filter-used motion compensated prediction unit 160 determines whether or not there is another full-sub-pel position for which a filter coefficient has not been calculated yet (Step S112).

Here, when determining that there is another full-sub-pel position for which a filter coefficient has not been calculated yet (Y in Step S112), the adaptive-filter-used motion compensated prediction unit 160 repeats the processing starting from Step S108 on that full-sub-pel position. When determining that there is no other full-sub-pel position for which a filter coefficient has not been calculated yet (N in Step S112), the adaptive-filter-used motion compensated prediction unit 160 identifies in the current picture one or more blocks having a motion vector specifying a predetermined sub-sub-pel position in the reference picture (Step S114).

The adaptive-filter-used motion compensated prediction unit 160 calculates a filter coefficient of the predetermined sub-sub-pel position using, among the blocks included in the current picture, the block(s) identified in Step S114, without using any other blocks in the current picture (Step S116). After calculating the filter coefficient of one sub-sub-pel position in the above manner, the adaptive-filter-used motion compensated prediction unit 160 determines whether or not there is another sub-sub-pel position for which a filter coefficient has not been calculated yet (Step S118).

Here, when determining that there is another sub-sub-pel position for which a filter coefficient has not been calculated yet (Y in Step S118), the adaptive-filter-used motion compensated prediction unit 160 repeats the processing starting from Step S114 on that sub-sub-pel position. When determining that there is no other sub-sub-pel position for which a filter coefficient has not been calculated yet (N in Step S112), the adaptive-filter-used motion compensated prediction unit 160 determines that filter coefficients of the separable two-dimensional adaptive interpolation filter have been calculated for all the sub-pel positions. In addition, the adaptive-filter-used motion compensated prediction unit 160 performs motion compensation on the current block, using the motion vectors detected in Step S100 and the calculated filter coefficients (Step S220).

In such a manner, in the present embodiment, motion vectors of all the blocks of the current picture are detected at sub-pel resolution, and plural blocks having motion vectors specifying a sub-pel position (p, q) on the reference picture are identified from the current picture. Then, a filter coefficient of the sub-pel position (p, q) is determined based on the identified plural blocks. To be more specific, in the present embodiment, blocks having motion vectors specifying the sub-pel position (p, q) are identified from among all the blocks constituting the current picture, and a filter coefficient of the sub-pel position (p, q) is determined based only on the identified blocks. Therefore, assuming that the motion vectors of all the blocks constituting the current picture specify various sub-pel positions on the reference picture, the filter coefficient of the sub-pel position (p, q) is not determined based on images of all the blocks. This allows a significant reduction in the number of calculations required for filter coefficient determination, and thus efficient determination of appropriate filter coefficients can be achieved. Further, in the present embodiment, the motion vectors with sub-pel resolution which have been detected before the determination of the filter coefficients of the separable two-dimensional adaptive interpolation filter are used for motion compensation (block coding) and are included into a coded signal. That is to say, in the present embodiment, the motion vectors are detected at sub-pel resolution before the determination of the filter coefficients so that the motion vector are used in motion compensation, and thus it is possible to eliminate the need to detect, after the determination of the filter coefficients, motion vectors at sub-pel resolution for use in the motion compensation and for inclusion into a coded signal. Therefore, the processing load can be reduced. It is to be noted that the present invention is not intended to inhibit, after determining the filter coefficients of the separable two-dimensional adaptive interpolation filter, the detection of motion vectors with sub-pel resolution using the filter coefficients and the use of the detected motion vectors in motion compensation.

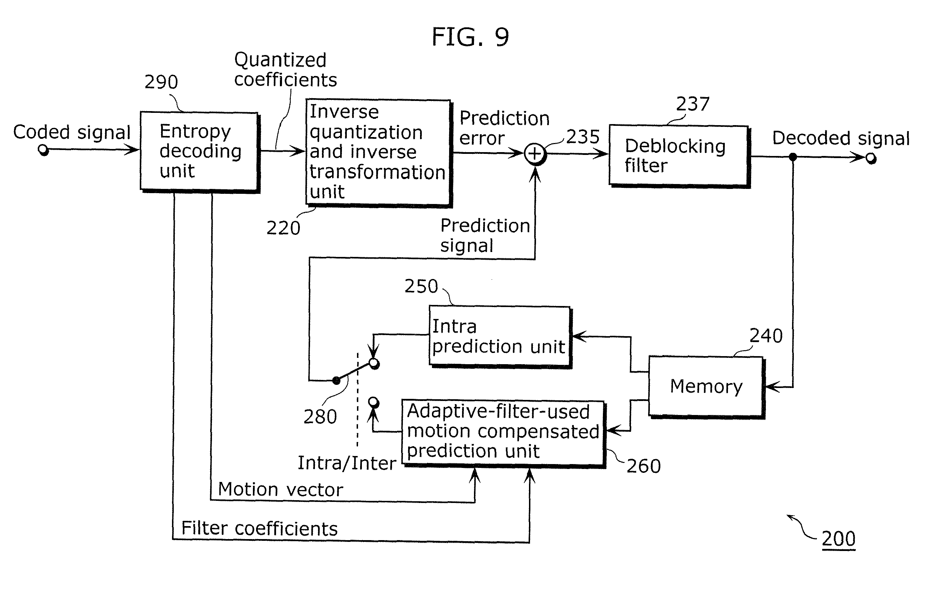

FIG. 9 is a block diagram showing an example of a video decoding apparatus in the present embodiment.

A video decoding apparatus 200 in the present embodiment includes an inverse quantization and inverse transformation unit 220, an adder 235, a deblocking filter 237, a memory 240, an intra prediction unit 250, an adaptive-filter-used motion compensated prediction unit 260, a switch 280, and an entropy decoding unit 290.

The entropy decoding unit 290 obtains a coded signal which is a bit stream provided by the video coding apparatus 100, and performs entropy decoding on the coded signal. Through the entropy decoding, the entropy decoding unit 290 extracts quantized coefficients, motion vectors, and filter coefficients from the coded signal, and outputs the quantized coefficients to the inverse quantization and inverse transformation unit 220, and the motion vectors and the filter coefficients to the adaptive-filter-used motion compensated prediction unit 260.

The inverse quantization and inverse transformation unit 220 has the same functions and structure as that of the inverse quantization and inverse transformation unit 130 of the video coding apparatus 100. The inverse quantization and inverse transformation unit 220 performs inverse quantization on the quantized coefficients obtained from the entropy decoding unit 290 to generate orthogonal transform coefficients, and performs inverse orthogonal transformation on the orthogonal transform coefficients to generate a prediction error, which is then provided to the adder 235.

The adder 235 has the same functions and structure as that of the adder 135 of the video coding apparatus 100. That is to say, the adder 235 adds up the prediction error obtained from the inverse quantization and inverse transformation unit 220 and a predicted image indicated by a prediction signal obtained from the intra prediction unit 250 or the adaptive-filter-used motion compensated prediction unit 260. The adder 135 then outputs a decoded image indicating the above sum to the deblocking filter 237.

The deblocking filter 237 has the same functions and structure as that of the deblocking filter 137 of the video coding apparatus 100. That is to say, the deblocking filter 237 applies a deblocking filter to the decoded image to remove coding distortion in the decoded image, and stores in the memory 240 the resulting decoded image from which the coding distortion has been removed.

Into the memory 240, the deblocking filter 237 sequentially stores decoded images, as with the memory 140 of the video coding apparatus 100. As a result, reference pictures to be used for the generation of predicted images corresponding to subsequent current blocks are stored in the memory 240.

The intra prediction unit 250 has the same functions and structure as that of the intra prediction unit 150 of the video coding apparatus 100. That is to say, the intra prediction unit 250 performs intra picture prediction (intra prediction) on a current block, and outputs a prediction signal indicating a predicted image corresponding to the current block, to the switch 180.

The switch 280 has the same functions and structure as that of the switch 180 of the video coding apparatus 100. That is to say, the switch 280 outputs the prediction signal obtained from the intra prediction unit 250 to the adder 235 when intra picture prediction (intra prediction) is to be performed on the current block, and outputs a prediction signal obtained from the adaptive-filter-used motion compensated prediction unit 260 to the adder 235 when inter picture prediction (inter prediction) is to be performed on the current block.

The adaptive-filter-used motion compensated prediction unit 260 has the same functions and structure as that of the adaptive-filter-used motion compensated prediction unit 160 of the video coding apparatus 100. That is to say, upon obtaining from the entropy decoding unit 290 the motion vectors with sub-pel resolution corresponding to the respective blocks, the adaptive-filter-used motion compensated prediction unit 260 calculates filter coefficients of the separable two-dimensional adaptive interpolation filter based on the blocks having these motion vectors. In addition, the adaptive-filter-used motion compensated prediction unit 260 performs motion compensation on the current block using the calculated filter coefficients, so that it generates a predicted image corresponding to the current block and outputs a prediction signal indicating the predicted image to the switch 280. The filter coefficient calculation and motion compensation performed by the adaptive-filter-used motion compensated prediction unit 260 are the same as the above-described filter coefficient calculation and motion compensation performed by the adaptive-filter-used motion compensated prediction unit 160.

Hereinafter, a method for determining a filter coefficient of the separable two-dimensional adaptive interpolation filter will be described in detail.

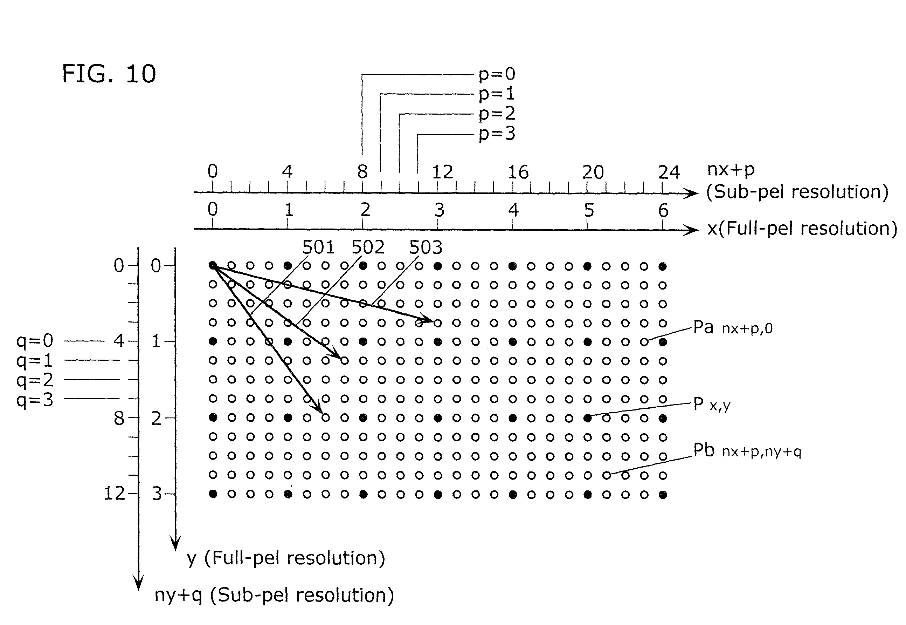

FIG. 10 shows pixel positions and pixel values of a reference picture with quarter-pel resolution.

Filled circles denote full-pel positions (i.e. sampling points of the original image), whereas open circles denote sub-pel positions, at which pixel values have to be interpolated. It is to be noted that the present invention may be applied to any sub-pel resolution (including sub-pel resolutions that are different in the vertical and horizontal directions).

Hereinafter, n denotes sub-pel resolution (i.e. n = 2 for half-pel resolution and n = 4 for quarter-pel resolution, etc). The positions on the reference picture are expressed with either full-pel resolution or sub-pel resolution. (x, y) indicates a coordinate position on the reference picture with full-pel resolution, and (nx + p, ny + q) indicates a coordinate position on the reference picture with sub-pel resolution. In other words, a full-pel position (nx, ny) expressed with sub-pel resolution matches the full-pel position (x, y) expressed with full-pel resolution. It is to be noted that (nx + p, ny + q) expressed with sub-pel resolution does not indicate a position common to all full-pel ranges as in the above-described case of (p, q), but indicates a particular position on the reference picture. Hereinafter, (p, q) is referred to as a position on a local coordinate so as to distinguish it from (nx + p, ny + q). Moreover, $P_{x, y}$ is defined as a pixel value of a pixel located at a full-pel position (x, y) of the original reference picture. In addition, $Pa_{nx+p,0}$ is defined as a pixel value of a pixel located at a position (nx + p, 0) on the reference picture expressed with sub-pel resolution, and $Pb_{nx+p,ny+q}$ is defined as a pixel value of a pixel located at a position (nx + p, ny + q) on the reference picture expressed with sub-pel resolution (see FIG. 10).

Motion vector is expressed as mv = $(v_x, v_y)$. That is to say, motion vectors 501, 502, and 503 are expressed by assignment of horizontal and vertical positions expressed with sub-pel resolution to the components $v_x$ and $V_y$, respectively. The motion vector 503 satisfying $v_x$ mod n = 0 specifies a full-pel position in the x direction (horizontal direction). The motion vectors 501 and 502 satisfying $v_x$ mod n = 1, ..., (n - 1) specify sub-pel positions in the x direction. Likewise, the motion vector 501 specifies a full-pel position in the y direction (vertical direction), and the motion vectors 502 and 503 specify sub-pel positions in the y direction.

As described above, the separable two-dimensional adaptive interpolation filter in the present embodiment can be separated into a one-dimensional horizontal interpolation filter and a one-dimensional vertical interpolation filter. More specifically, a pixel value $Pa_{nx+p,y}$ of a pixel located at a full-pel position in the vertical direction, that is, at a position (nx + p, y) is expressed by the following (Eq. 1) using the one-dimensional horizontal interpolation filter.

[Eq. 1]

$$Pa_{nx+p,y} = \sum_i g_i^{(p)} P_{x-i,y}$$

Here, $g_i^{(p)}$ denotes plural coefficients included in a horizontal filter coefficient $g^{(p)}$ corresponding to a position $(p, 0)$ on the local coordinate, and are discrete coefficients of the one-dimensional horizontal interpolation filter having $i = -2, -1, 0, 1, 2, 3$ in the case of a 6-tap filter. In other words, the filter coefficient $g^{(p)}$ of the one-dimensional horizontal interpolation filter corresponding to the position $(p, 0)$ on the local coordinate includes six coefficients $g_{-2}^{(p)}$, $g_{-1}^{(p)}$, $g_0^{(p)}$, $g_1^{(p)}$, $g_2^{(p)}$, and $g_3^{(p)}$. $P_{x-1,y}$ is a pixel value of a full pixel located at a full-pel position $(x - i, y)$ (where $i = -2, -1, 0, 1, 2, 3$). Thus, a pixel value $Pa_{nx+p,y}$ of a pixel located at a full-pel position in the vertical direction, that is, at a position $(nx + p, y)$ is expressed as a sum of products which are obtained by multiplying each of pixel values $P_{x-i,y}$ (where $i = -2, -1, 0, 1, 2, 3$) of horizontally arranged six full pixels by a coefficient $g_i^{(p)}$ (where $i = -2, -1, 0, 1, 2, 3$). Such a horizontal filter coefficient $g^{(p)}$ depends on a particular position $p$ on the local coordinate. Hence, the filter coefficient $g^{(p)}$ of the one-dimensional horizontal interpolation filter is determined for each position $p$.

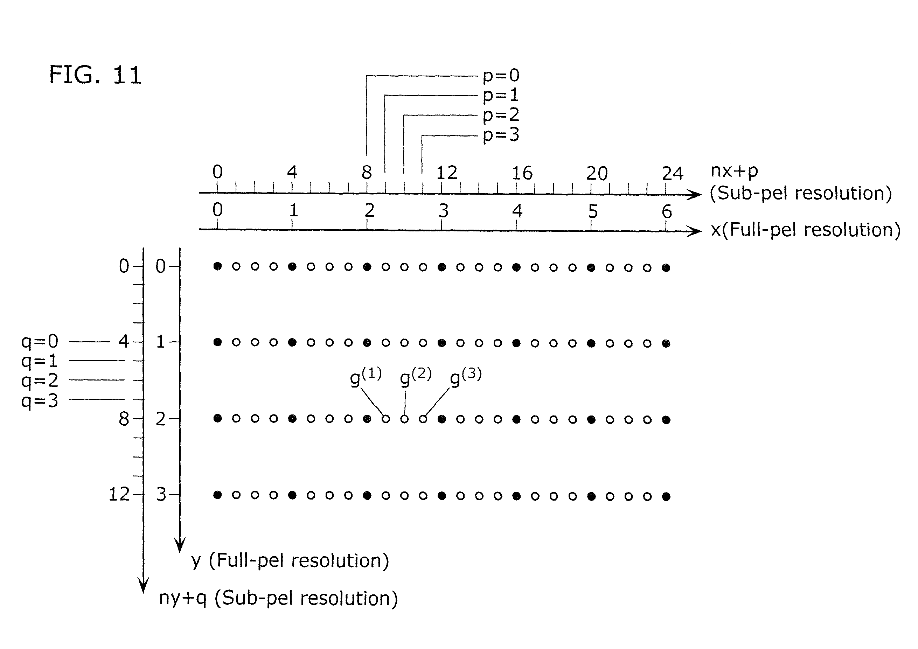

FIG. 11 shows sub pixels whose values are to be interpolated by the one-dimensional horizontal interpolation filter and filter coefficients of such sub pixels. It is to be noted that in FIG. 10, filled circles denote full pixels having known pixel values, and open circles denote sub pixels whose values are to be interpolated.

The filter coefficient $g^{(p)}$ is determined for each of sub-full-pel positions $(p, 0)$ (where $p = 1, ..., (n - 1)$) on the local coordinate. For example, when $n = 4$, a filter coefficient $g^{(1)}$ is determined for the sub-full-pel position $(1, 0)$, a filter coefficient $g^{(2)}$ is determined for the sub-full-pel position $(2, 0)$, and a filter coefficient $g^{(3)}$ is determined for the sub-full-pel position $(3, 0)$.

Once the filter coefficients $g^{(p)}$ of the one-dimensional horizontal interpolation filter are determined in such a manner, a pixel value $Pb_{nx+p,y+q}$ of a pixel located at a position $(nx + p, y + q)$ is determined by the following (Eq. 2) using the one-dimensional vertical interpolation filter.

[Eq. 2]

$$ Pb_{nx+p,ny+q} = \sum_j h_j^{(p,q)} Pa_{nx+p,y-j} = \sum_{i,j} g_i^{(p)} h_j^{(p,q)} P_{x-i,y-j} $$

Here, $h_j^{(p,q)}$ denotes plural coefficients included in a vertical filter coefficient $h^{(p,q)}$ corresponding to a position $(p, q)$ on the local coordinate. In the case of a 6-tap filter, for example, $h_j^{(p,q)}$ are discrete coefficients of the one-dimensional vertical interpolation filter having $j = -2, -1, 0, 1, 2, 3$. In other words, the filter coefficient $h^{(p,q)}$ of the one-dimensional vertical interpolation filter corresponding to the position $(p, q)$ on the local coordinate includes six coefficients $h_{-2}^{(p,q)}$, $h_{-1}^{(p,q)}$, $h_0^{(p,q)}$, $h_1^{(p,q)}$, $h_2^{(p,q)}$ and $h_3^{(p,q)}$. Further, $Pa_{nx+p,y-j}$ is a pixel value of a pixel located at a full-pel position in the vertical direction, that is, at a position $(nx + p, y - j)$ (where $j = -2, -1, 0, 1, 2, 3$). Therefore, the pixel value $Pa_{nx+p,y-j}$ of a horizontally interpolated sub pixel is also multiplied by a coefficient $h_j^{(p,q)}$. Thus, a pixel value $Pb_{nx+p,ny+q}$ of a pixel located at a position $(nx + p, ny + q)$ is expressed as a sum of products which are obtained by multiplying each of the pixel values $Pa_{nx+p,y-j}$ (where $j = -2, -1, 0, 1, 2, 3$) of vertically arranged six pixels by a coefficient $h_j^{(p,q)}$ (where $j = -2, -1, 0, 1, 2, 3$). The vertical filter coefficient $h^{(p,q)}$ depends on a particular position $(p, q)$ on the local coordinate. Hence, the filter coefficient $h^{(p,q)}$ of the one-dimensional vertical interpolation filter is determined for each pixel position $(p, q)$.

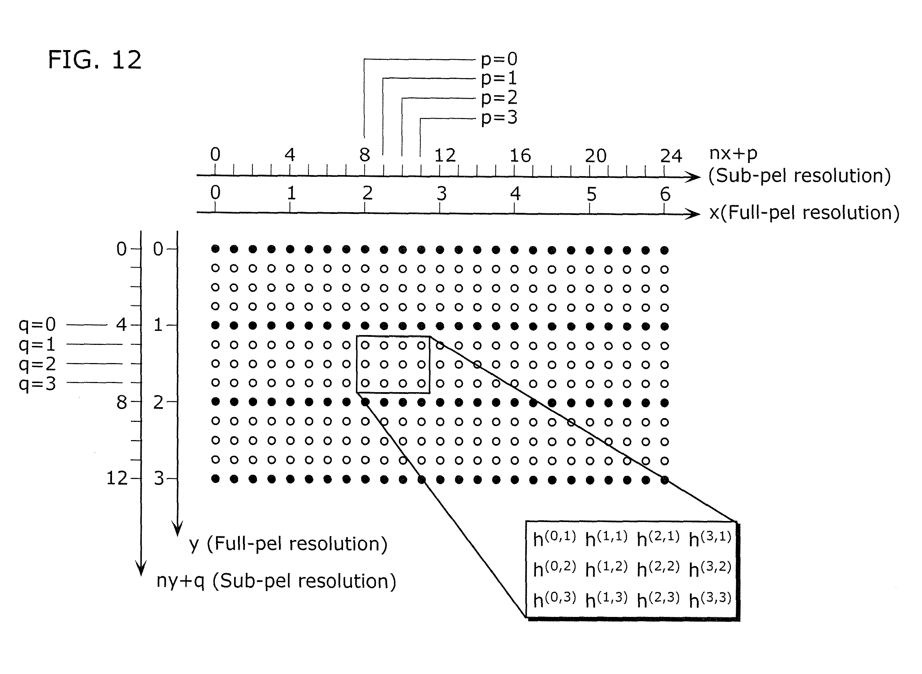

FIG. 12 shows sub pixels whose values are to be interpolated by the one-dimensional vertical interpolation filter and filter coefficients of such sub pixels. It is to be noted that in FIG. 12, filled circles denote full pixels and sub pixels having known pixel values, and open circles denote sub pixels whose values are to be interpolated.

The filter coefficient $h_j^{(p,q)}$ is determined for each of sub-pel positions $(p, q)$ (where $p = 0, ..., (n - 1)$ and $q = 1, ..., (n - 1)$) on the local coordinate. For example, when $n = 4$, the filter coefficient $h_j^{(p,q)}$ is determined for each of twelve sub pixels. To be more specific, a filter coefficient $h_j^{(0,1)}$ is determined for the sub-pel position $(0, 1)$, a filter coefficient $h_j^{(1,1)}$ is determined for the sub-pel position $(1, 1)$, and a filter coefficient $h_j^{(1,2)}$ is determined for the sub-pel position $(1, 2)$.

It is to be noted that in the present embodiment, it is required that the application of the one-dimensional horizontal interpolation filter and the one-dimensional vertical interpolation filter does not alter the pixel values of pixels located at full-pel positions. In other words, it is required that the one-dimensional horizontal interpolation filter and the one-dimensional vertical interpolation filter do not affect the pixel values of full pixels. Hence, the condition shown in the following (Eq. 3) needs to be met when $p$ and $q$ are both 0.

[Eq. 3]

$$g_i^{(0)} = \delta_{i,0} \wedge h_j^{(0,0)} = \delta_{j,0}$$

Here, $\delta_{k,l}$ is Kronecker delta, and $\delta_{k,l} = 1$ when k = 1 and $\delta_{k,l} = 0$ when k ≠ 1. Further, it is also required that the application of the one-dimensional vertical interpolation filter does not alter the result of the one-dimensional horizontal interpolation filter (the pixel values of sub pixels). In other words, it is required that the one-dimensional vertical interpolation filter does not affect the pixel values of sub pixels, that is the result of the one-dimensional horizontal interpolation filter. Hence, the condition shown in the following (Eq. 4) needs to be met when q is 0.
[Eq. 4]

$$h_j^{(p,0)} = \delta_{j,0}$$

Thus, even when p and q are both 0, there are practically filter coefficients $g^{(1)}$ ..., $g^{(n-1)}$ of the one-dimensional horizontal adaptive interpolation filter corresponding to (n - 1) sub-full-pel positions and filter coefficients $h^{(0,1)}$ ..., $h^{(0,n-1)}$, $h^{(1,1)}$, ..., $h^{(n-1,n-1)}$ of the one-dimensional vertical interpolation filter corresponding to n (n - 1) sub-pel positions (full-sub-pel positions and sub-sub-pel positions).
In the present embodiment, initially identified from a current picture is one or more blocks having a motion vector mv = $(v_x, v_y)$ ($v_x$ mod n ≠ 0, $v_y$ mod n = 0) with sub-pel resolution specifying a predetermined sub-full-pel position (p, 0) (where p ≠ 0) on each local coordinate of a reference picture. Then, in the present embodiment, the filter coefficient $g^{(p)}$ (coefficients $g_i^{(p)}$) of the one-dimensional horizontal interpolation filter is optimized in such a manner that the prediction error $(e_p)^2$ shown in the following (Eq. 5) is minimized.
[Eq. 5]

$$(e_p)^2 = \sum_{x,y} \left( S_{x,y} - \sum_i g_i^{(p)} P_{xd-i,yd} \right)^2$$

Here, $S_{x,y}$ is a pixel value of a full pixel located at a position (x, y) on the current picture expressed with full-pel resolution, and $P_{xd-1,yd}$ is a pixel value of a pixel located at a full-pel position (xd - i, yd) on a previously decoded reference picture. Further, xd is defined as xd = x + [[$v_x$/n]], yd is defined as yd = y + [[$v_y$/n]], and p is expressed as p = $V_x$ mod n. It is to be noted that [[A]] is a floor operator that indicates the largest integer equal to or smaller than an argument A. Furthermore, since $v_y$ mod n = 0 is satisfied as described above, yd is indicated as yd = y + [[$v_y$/n]] = y + $v_y$/n.
That is to say, a position (xd, yd) is a full-pel position which is horizontally near a sub-pel position (x + $v_x$/n, y + $v_y$/n) on the reference picture specified by the full-pel position (x, y) on the current picture and by a motion vector mv = $(v_x, v_y)$ with sub-pel resolution. Further, the position (xd - i, yd) indicates six full-pel positions that are consecutively arranged in the horizontal direction, where i is -2, -1, 0, 1, 2, 3, for example.

The range of possible values to be taken by x and y is a range including one or more blocks of a current picture having a motion vector specifying a predetermined sub-full-pel position (p, 0) on each local coordinate. On the position (x, y) in the one or more blocks, minimization of the prediction error shown in the above (Eq. 5) is performed. It is to be noted that the above blocks correspond to macroblocks. That is to say, the range of possible values to be taken by x and y includes a (non-connected) union of some or all of macroblocks (in one or more video data) having a motion vector specifying the same sub-pel position on each local coordinate (i.e. a motion vector satisfying $v_x \bmod n = p$ and $v_y \bmod n = 0$).

As described above, in the present embodiment, the filter coefficient $g^{(p)}$ of the one-dimensional horizontal interpolation filter is determined in such a manner that the prediction error shown in (Eq. 5) is minimized. Such a minimization (optimization) algorithm may employ any known techniques (for example, gradient descent or simulated annealing). For example, the optimal filter coefficient $g^{(p)}$ is determined by solving a linear equation resulting from computing partial derivatives of (Eq. 5). Such a linear equation is shown in the following (Eq. 6).

[Eq. 6]

$$0 = \frac{\partial}{\partial g_k^{(p)}} \sum_{x,y} \left( S_{x,y} - \sum_i g_i^{(p)} P_{xd-i,yd} \right)^2 = -2 \sum_{x,y} P_{xd-i,yd} \left( S_{x,y} - \sum_i g_i^{(p)} P_{xd-i,yd} \right)$$

Such optimization determines the filter coefficient $g^{(p)}$ of the one-dimensional horizontal interpolation filter corresponding to one sub-full-pel position (p, 0) on the local coordinate. Then, the same optimization is repeatedly performed on the other sub-full-pel positions (p, 0) to sequentially determine a filter coefficient $g^{(p)}$ for each of these positions.

Use of such determined filter coefficient $g^{(p)}$ of the one-dimensional horizontal interpolation filter allows calculation, using the above (Eq. 1), of a pixel value $Pa_{nx+p,y}$ of a sub pixel located at a sub-pel position in the horizontal direction and at a full-pel position in the vertical direction on a previously decoded reference picture.

In the present embodiment, identified next from the current picture is one or more blocks having motion vectors $mv = (v_x, v_y)$ ($v_y \bmod n \neq 0$) with sub-pel resolution specifying the same sub-pel position (p, q) (where $q \neq 0$) on each local coordinate of the reference picture except for sub-full-pel positions. Then, in the present embodiment, the filter coefficient $h^{(p,q)}$ (coefficients $h_j^{(p,q)}$) of the one-dimensional vertical interpolation filter is determined in a second step through the minimization of the prediction error that takes vertical motions of the sub pixels into account. In other words, the filter coefficient $h^{(p,q)}$ is optimized in such a manner that the prediction error $(e_{p,q})^2$ shown in the following (Eq. 7) is minimized.

[Eq. 7]

$$(e_{p,q})^2 = \sum_{x,y} \left( S_{x,y} - \sum_j h_j^{(p,q)} Pa_{nx+v_x,yd-j} \right)^2$$

Here, $S_{x,y}$ is a pixel value of a full pixel located at a position (x, y) on the current picture expressed with full-pel resolution, and $Pa_{nx+vx,yd-j}$ is a pixel value of a pixel located at a position (nx + $v_x$, yd - j) that is a sub-full-pel position or a full-pel position on the reference picture. Further, p is expressed as $p = v_x \bmod n$, whereas q is expressed as $q = v_y \bmod n \neq 0$. That is to say, the position ($n_x + v_x$, yd) is a sub-full-pel position or a full-pel position that is vertically near a sub-pel position (x + $v_x$/n, y + $v_y$/n) on the reference picture specified by the full-pel position (x, y) on the current picture and by a motion vector $mv = (v_x, v_y)$ with sub-pel resolution. Further, the position (nx + $v_x$, yd - j) indicates six sub-full-pel positions or six full-pel positions that are consecutively arranged in the vertical direction, where j is -2, -1, 0, 1, 2, 3, for example.

The range of possible values to be taken by x and y is a range including one or more blocks of the current picture having a motion vector specifying a predetermined sub-pel position (p, q) (where $q \neq 0$) in each local coordinate.

On the position (x, y) in the one or more blocks, minimization of the prediction error shown in the above (Eq. 7) is performed. It is to be noted that the above blocks correspond to macroblocks. That is to say, the range of possible values to be taken by x and y includes a (non-connected) union of some or all of macroblocks having motion vectors specifying the same sub-pel position on each local coordinate (i.e. a motion vector satisfying $v_x$ mod n = p and $v_y$ mod n = q ≠ 0).

As described above, in the present embodiment, the filter coefficient $h^{(p,q)}$ of the one-dimensional vertical interpolation filter is determined in such a manner that the prediction error shown in (Eq. 7) is minimized. Such a minimization (optimization) algorithm may employ any known techniques (for example, gradient descent or simulated annealing). For example, the optimal filter coefficient $h^{(p,q)}$ is determined by solving a linear equation resulting from computing partial derivatives of (Eq. 7). Such a linear equation is shown in the following (Eq. 8).

[Eq. 8]

$$0 = \frac{\partial}{\partial h_k^{(p,q)}} \sum_{x,y} \left( S_{x,y} - \sum_j h_j^{(p,q)} Pa_{nx+v_x, yd-j} \right)^2$$

$$= -2 \sum_{x,y} Pa_{nx+v_x, yd-k} \left( S_{x,y} - \sum_j h_j^{(p,q)} Pa_{nx+v_x, yd-j} \right)$$

Such optimization determines the filter coefficient $h_j^{(p,q)}$ of the one-dimensional vertical interpolation filter corresponding to one sub-pel position (p, q) (where q ≠ 0) on the local coordinate. Then, the same optimization is repeatedly performed on the other sub-pel positions (p, q) (where q ≠ 0) to sequentially determine a filter coefficient $h^{(p,q)}$ for each of these positions.

Use of such determined filter coefficient $h_j^{(p,q)}$ of the one-dimensional vertical interpolation filter allows calculation, using the above (Eq. 2), of a pixel value $Pb_{nx+p,ny+q}$ of a sub pixel located at a sub-pel position (p, q) (where q ≠ 0) on a previously decoded reference picture.

As described, the separable two-dimensional adaptive interpolation filter in the present embodiment can be separated into a one-dimensional horizontal interpolation filter and a one-dimensional vertical interpolation filter. Then, the filter coefficient $g^{(p)}$ of the one-dimensional horizontal interpolation filter and the filter coefficient $h^{(p,q)}$ of the one-dimensional vertical interpolation filter are separately calculated. Further, through the motion compensation, pixel values of sub pixels located at full-pel positions in the vertical direction and at sub-pel positions in the horizontal direction are calculated using the filter coefficient $g^{(p)}$, whereas pixel values of sub pixels located at sub-pel positions in the vertical direction are calculated using the filter coefficient $h^{(p,q)}$. It is to be noted that the motion compensation on the current block uses only the filter coefficient corresponding to a position (p, q) on the local coordinate which is specified by a motion vector mv of the current block with sub-pel resolution. As a result, the pixel value of the sub pixel located at the position (p, q) on each local coordinate of a reference picture is calculated to generate a predicted image which includes the sub pixel located at the position (p, q).

In the above description, $g^{(p)}$ and $h^{(p,q)}$ denote filter coefficients of the one-dimensional horizontal interpolation filter and filter coefficients of the one-dimensional vertical interpolation filter, respectively. Further, the filter coefficients of the one-dimensional horizontal interpolation filter are determined prior to determining the filter coefficients of the one-dimensional vertical interpolation filter. However, the roles of $g^{(p)}$ and $h^{(p,q)}$ may be exchanged so that the filter coefficients of the one-dimensional vertical interpolation filter are determined prior to determining the filter coefficients of the one-dimensional horizontal interpolation filter.

Furthermore, the above description has shown that the filter coefficient $h^{(p,q)}$ of the one-dimensional vertical interpolation filter depends on a sub-pel position p in the horizontal direction. However, the filter coefficient $h^{(p,q)}$ may be invariable and not dependent on the sub-pel position p. In this case, the filter coefficient $h^{(p,q)}$ becomes $h^{(q)}$, which still produces advantageous effects similar to that in the case of $h^{(p,q)}$. In addition, this reduces the number of filter coefficients of the one-dimensional vertical interpolation filter to (n - 1), allowing reduction of signaling overhead.

Further, instead of first calculating the filter coefficients of the one-dimensional horizontal interpolation filter, a horizontally invariable filter coefficient $h^{(q)}$ of the one-dimensional vertical interpolation filter may be determined as with the filter coefficient $g^{(p)}$. In this case, the filter coefficient $h^{(q)}$ (coefficients $h_j^{(q)}$ does not depend on p, and thus p in (Eq. 7) can be replaced with p = 0. As a result, the filter coefficient $h^{(q)}$ is determined in such a manner that the prediction error $(e_{0,q})^2$ shown in the following (Eq. 9) is minimized. It is to be noted that in (Eq. 9), the relationships of xd = x + [[$v_x$/n]], $v_x$ mod n = 0, yd = y + [[$v_y$/n]], and $v_y$ mod n = q are satisfied.

$$[\text{Eq. 9}]$$

$$(e_{0,q})^2 = \sum_{x,y} \left( S_{x,y} - \sum_j h_j^{(q)} Pa_{nx+v_x,\,yd-j} \right)^2 = \sum_{x,y} \left( S_{x,y} - \sum_j h_j^{(q)} Pa_{xd,\,yd-j} \right)^2$$

(Eq. 9) is has a similitude relation with (Eq. 5). That is to say, the range of possible values to be taken by x and y is a range including one or more blocks of a current picture having a motion vector specifying a predetermined full-sub-pel position (0, q) in each local coordinate, and minimization of the prediction error shown in the above (Eq. 9) is performed on the position (x, y) in the one or more blocks. It is to be noted that the above blocks correspond to macroblocks. That is to say, the range of possible values to be taken by x and y includes a (non-connected) union of some or all of macroblocks having motion vectors specifying the same sub-pel position in each local coordinate (i.e. a motion vector satisfying $v_x$ mod n = 0 and $v_y$ mod n = q).

Further, in the present embodiment, coefficients included in a filter coefficient are individually determined. However, in the case where pixels to which coefficients are to be assigned as a weight are symmetrically arranged in the horizontal or vertical direction with respect to a sub-pel position to which the filter coefficient is applied, the symmetry may be utilized to equalize coefficients which are to be assigned as weights to the symmetric pixels, among the coefficients included in the filter coefficient of the sub-pel position. As a result, the overhead for transmitting filter coefficients can be further reduced. More specifically, in such a case as above, the coefficients included in the filter coefficient of the sub-pel position are determined through horizontal or vertical mirroring as shown in (Eq. 10). For example, in the case of quarter-pel resolution (n = 4), (Eq. 10) is applied to the filter coefficient of a sub-pel position where p = 2 and/or q = 2.

$$[\text{Eq. 10}]$$

$$g_i^{(p)} = g_{-i}^{(p)} \qquad h_j^{(p,\,q)} = h_{-j}^{(p,\,q)}$$

Further, in the present embodiment, filter coefficients corresponding to sub-pel positions are individually determined. However, in the case where two sub-pel positions between full pixels adjacent to each other are horizontally or vertically symmetric with respect to the midway between the full pixels, the symmetry may be utilized to equalize filter coefficients of these two sub-pel positions. As a result, the overhead for transmitting filter coefficients can be further reduced. More specifically, in such a case as above, the filter coefficients of the symmetric sub-pel positions are determined through horizontal or vertical mirroring as shown in (Eq. 11). For example, in the case of quarter-pel resolution (n = 4), the filter coefficient of a sub-pel position where p = 3 is determined to be the same as the filter coefficient of a sub-pel position where p = 1.

$$[\text{Eq. 11}]$$

$$g^{(p)} = g^{(n-p)} \qquad h^{(p,\,q)} = h^{(p,\,n-q)}$$

Here, there is a case where, for example, a filter coefficient of the sub-pel position (3, 0) cannot be calculated using a prediction error because no motion vector specifying the sub-pel position (3, 0) is detected by the motion estimation unit 170 and there is no block having that motion vector mv in the current picture. However, in the case where a filter coefficient of the sub-pel position (1, 0) can be calculated using a prediction error, the filter coefficient of the sub-pel position (3, 0) can be determined as the filter coefficient of the sub-pel position (1, 0), using the above-described symmetry (Eq. 11).

It is to be noted that apart from using such symmetry as above, the filter coefficient of the sub-pel position (3, 0) may be determined as the filter coefficient of that sub-pel position calculated with respect to a previous picture. Moreover, the filter coefficient of the sub-pel position (3, 0) may be determined as a default filter coefficient. Further, the filter coefficient of the sub-pel position (3, 0) does not have to be determined. In this case, the filter coefficient of that sub-pel position is not used, and the video coding apparatus 100 does not transmit the filter coefficient of that sub-pel position to the video decoding apparatus 200.

Furthermore, as shown in (Eq. 12), filter coefficients may be determined in such a manner that the relationships in (Eq. 10) and (Eq. 11) are satisfied.

[Eq. 12]

$$g_i{}^{(p)} = g_{-i}{}^{(n-p)} \qquad h_j{}^{(p,\, q)} = h_{-j}{}^{(p,\, n-q)}$$

Further, the present invention is not limited to the above symmetry, and other symmetries including rotational symmetries may be exploited to reduce the overhead for transmitting filter coefficients.

As described, in the case where no motion vector specifying a predetermined sub-pel position is detected by the motion estimation unit 170 and no block having that motion vector is identified in the current picture, the adaptive-filter-used motion compensated prediction unit 160 may determine the filter coefficient of the predetermined sub-pel position using, for example, the symmetry of pixel positions, a filter coefficient of another picture, or a default filter coefficient which have been described above. Alternatively, the adaptive-filter-used motion compensated prediction unit 160 does not have to determine the filter coefficient of the predetermined sub-pel position as described above.

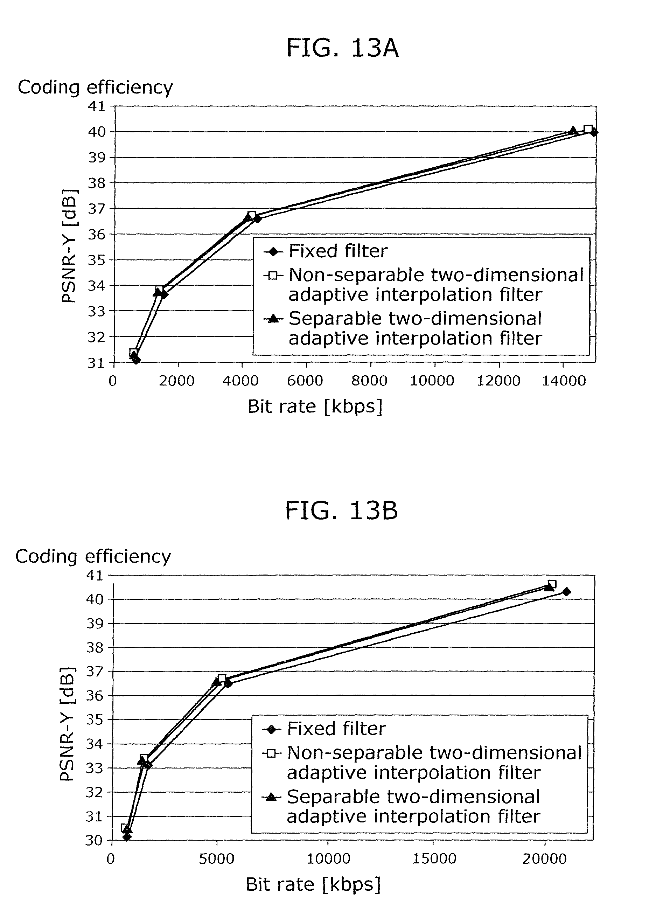

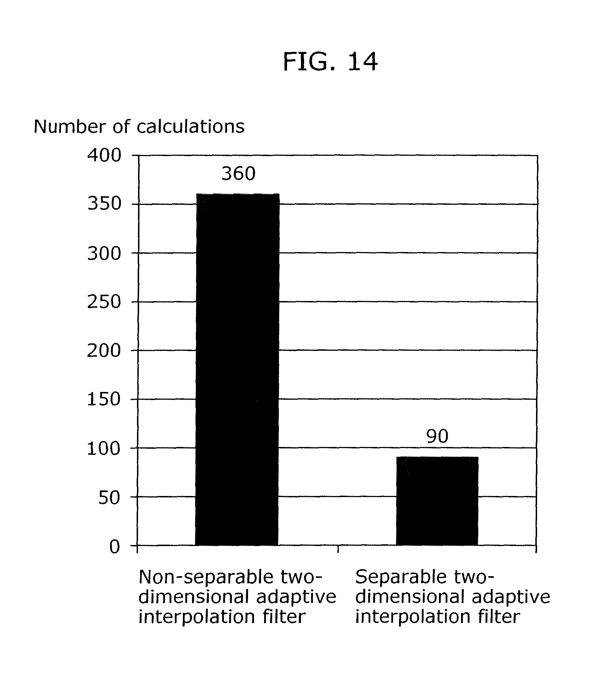

Hereinafter, an advantageous effect of the present invention will be described with reference to FIGS. 13A, 13B, and 14.

FIGS. 13A and 13B are charts comparing the results of measuring the coding efficiency achieved by the video coding apparatus 100 in the present embodiment and the coding efficiency achieved by conventional techniques. It is to be noted that the coding efficiency shown in FIG. 13A and FIG. 13B is measured using different input images, which are the condition for measuring the efficiency.

As shown in FIGS. 13A and 13B, the coding efficiency of the video coding apparatus 100 that performs motion compensation using the separable two-dimensional adaptive interpolation filter of the present embodiment is compared with the coding efficiency of a video coding apparatus that performs motion compensation using a conventional two-dimensional fixed interpolation filter of H.264/AVC and the coding efficiency of a video coding apparatus that performs motion compensation using a conventional non-separable two-dimensional adaptive interpolation filter. It can be seen from these charts that the coding efficiency achieved with the use of the separable two-dimensional adaptive interpolation filter of the present embodiment is approximately the same as the coding efficiency achieved with the use of the conventional non-separable two-dimensional adaptive interpolation filter, but is higher than the coding efficiency achieved with the use of the conventional two-dimensional fixed interpolation filter.

FIG. 14 is a chart comparing the number of calculations required for the filtering of the video coding apparatus 100 in the present embodiment and for conventional filtering.

As shown in FIG. 14, the number of calculations required for applying a conventional non-separable two-dimensional adaptive interpolation filter (6x6-tap filter) is 360. On the other hand, the number of calculations required for the application of the separable two-dimensional adaptive interpolation filter (6-tap filter) by the video coding apparatus 100 of the present embodiment is 90. Thus, the present embodiment achieves reduction in the number of calculations required for the filtering.

It is to be noted that in the present embodiment, one separable two-dimensional adaptive interpolation filter is determined for one reference picture. In other words, when there are common sub-pel positions (p, q) on one reference picture, an identical filter coefficient is determined for such positions. The present invention, however, is not limited to this, and one separable two-dimensional adaptive interpolation filter may be determined for plural pictures (sequence) or a slice. In this case, when there are common sub-pel positions (p, q) on the sequence or slice, an identical filter coefficient is determined for such positions. That is to say, according to the present invention, a picture, a slice, or a sequence may be set as a unit of filter determination, and for each unit of filter determination, a filter coefficient of the separable two-dimensional adaptive interpolation filter may be determined for a sub-pel position (p, q) included in that unit of filter determination.

The functional blocks in the block diagrams (FIGS. 3 and 9, for example) are typically implemented in the form of an LSI that is an integrated circuit. They may be implemented on a single chip individually, or on a single chip that includes some or all of them. For example, the functional blocks other than the memory may be implemented on a single chip. The name used here is LSI, but it is also called IC, system LSI, super LSI, or ultra LSI depending on the degree of integration. Moreover, ways to implement an integration circuit are not limited to LSI, but a special circuit or a general-purpose processor and so forth can also be used. It is also possible to use Field Programmable Gate Array (FPGA) that can be programmed after the LSI is manufactured or a reconfigurable processor which can reconfigure the connection or setting of a circuit cell inside the LSI after the LSI is manufactured.

Further, if a technology of implementing an integrated circuit that supersedes the LSI is introduced as a result of development in the semiconductor technology or another derivative technology, integration of the functional blocks can surely be implemented using that technology. Biotechnology is one such possibility.

**Industrial Applicability**

The method for determining a filter coefficient of a two-dimensional adaptive interpolation filter of the present invention produces an advantageous effect of efficiently determining appropriate filter coefficients with less calculation. The method is applicable to, for example, a video coding apparatus, a camcorder, a camera mobile phone, and so on.

**Claims**

1. A method for determining a filter coefficient of a two-dimensional adaptive interpolation filter which is used for calculating a pixel value of a sub pixel to be interpolated between full pixels in a two-dimensional array, based on pixel values of the full pixels, said method comprising:

   a motion estimating step of estimating at sub-pel resolution, for each of blocks constituting a current picture, a motion of an image of the block from a reference picture as a motion vector;
   a first identifying step of identifying at least one block having a first motion vector specifying a sub-pel position on the reference picture from among the blocks having motion vectors with sub-pel resolution estimated in said motion estimating step, the sub-pel position having a predetermined relative positional relationship with a neighboring full pixel; and
   a first determining step of determining a filter coefficient of the sub-pel position based on an image of the at least one block identified in said first identifying step and an image of at least one block of the reference picture specified by the first motion vector of the at least one block identified in said first identifying step.

2. The method for determining a filter coefficient of a two-dimensional adaptive interpolation filter according to Claim 1, wherein the two-dimensional adaptive interpolation filter is separable into:

   a first one-dimensional interpolation filter used for calculating a pixel value of a sub pixel to be interpolated at a sub-pel position between pixels that are one-dimensionally arranged in a first direction, the first direction being one of a horizontal direction and a vertical direction; and
   a second one-dimensional interpolation filter used for calculating a pixel value of a sub pixel to be interpolated at a sub-pel position between pixels that are one-dimensionally arranged in a second direction, the second direction being one of the horizontal direction and the vertical direction other than the first direction,
   in said first identifying step, at least one block having the first motion vector specifying a first sub-pel position is identified, the first sub-pel position satisfying the predetermined relative positional relationship and being located at a sub-pel position in the first direction and at a full-pel position in the second direction,
   in said first determining step, a filter coefficient of the first one-dimensional interpolation filter is determined for the first sub-pel position, and
   said method for determining a filter coefficient further comprises:

      a second identifying step of identifying at least one block having a second motion vector specifying a second sub-pel position on the reference picture from among the blocks having the motion vectors with sub-pel resolution estimated in said motion estimating step, the second sub-pel position having another predetermined relative positional relationship with a neighboring full pixel and being located at a sub-pel position in the second direction; and

a second determining step of determining a filter coefficient of the second one-dimensional interpolation filter for the second sub-pel position based on an image of the at least one block identified in said second identifying step and an image of at least one block of the reference picture specified by the second motion vector of the at least one block identified in said second identifying step.

3. The method for determining a filter coefficient of a two-dimensional adaptive interpolation filter according to Claim 2, wherein in said second identifying step, at least one block having the second motion vector specifying the second sub-pel position is identified, the second sub-pel position satisfying the other predetermined relative positional relationship and being located at a full-pel position in the first direction and at a sub-pel position in the second direction.

4. The method for determining a filter coefficient of a two-dimensional adaptive interpolation filter according to Claim 2, wherein in said second identifying step, at least one block having the second motion vector specifying the second sub-pel position is identified, the second sub-pel position satisfying the other predetermined relative positional relationship and being located at a sub-pel position in the first and second directions, and in said second determining step, the filter coefficient of the first one-dimensional interpolation filter determined in said first determining step is applied to the first sub-pel position, and a result of the application is used to determine a filter coefficient of the second sub-pel position.

5. The method for determining a filter coefficient of a two-dimensional adaptive interpolation filter according to Claim 1, wherein in said first determining step, the filter coefficient of the sub-pel position is determined in such a manner that a difference is minimized between the image of the at least one block identified in said first identifying step and the image of the at least one block of the reference picture specified by the first motion vector of the at least one block identified in said first identifying step.

6. The method for determining a filter coefficient of a two-dimensional adaptive interpolation filter according to Claim 5, wherein in said first determining step, the filter coefficient of the sub-pel position is determined by solving a linear equation that minimizes the difference.

7. A method for video data compression, comprising:

a filter coefficient determining step of determining a filter coefficient of a two-dimensional adaptive interpolation filter by performing all the steps of the method for determining a filter coefficient of a two-dimensional adaptive interpolation filter according to Claim 1;

a motion compensating step of performing motion compensation on, as a current block, a block having a motion vector specifying the sub-pel position so as to generate a predicted image of the current block; and

a coding step of coding the filter coefficient determined in said filter coefficient determining step and a difference between the predicted image generated in said motion compensating step and an image of the current block,

wherein in said motion compensating step, a pixel value of a sub pixel to be interpolated at the sub-pel position is calculated by applying to the sub-pel position the filter coefficient determined in said filter coefficient determining step, and the predicted image which includes the sub pixel having the calculated pixel value is generated.

8. The method for video data compression according to Claim 7, wherein the two-dimensional adaptive interpolation filter is separable into:

a first one-dimensional interpolation filter used for calculating a pixel value of a sub pixel to be interpolated at a sub-pel position between pixels that are one-dimensionally arranged in a first direction, the first direction being one of a horizontal direction and a vertical direction; and

a second one-dimensional interpolation filter used for calculating a pixel value of a sub pixel to be interpolated at a sub-pel position between pixels that are one-dimensionally arranged in a second direction, the second direction being one of the horizontal direction and the vertical direction other than the first direction,

in said filter coefficient determining step:

a filter coefficient of the first one-dimensional interpolation filter is determined for a first sub-pel position on the reference picture, the first sub-pel position satisfying a predetermined relative positional relationship with a neighboring full pixel and being located at a sub-pel position in the first direction and at a full-pel position in the second direction; and

a filter coefficient of the second one-dimensional interpolation filter is determined for a second sub-pel position on the reference picture, the second sub-pel position satisfying another predetermined relative positional relationship with a neighboring full pixel and being located at a sub-pel position in the first and second directions, and in said motion compensating step, a block having a motion vector specifying the second sub-pel position is handled as a current block, a pixel value of a sub pixel to be interpolated at the second sub-pel position is calculated by applying the filter coefficient of the first one-dimensional interpolation filter to the first sub-pel position and applying the filter coefficient of the second one-dimensional interpolation filter to the second sub-pel position, and the predicted image which includes the sub pixel having the calculated pixel value is generated.

9.  The method for video data compression according to Claim 8,
    wherein in said motion compensating step, the filter coefficient of the first one-dimensional interpolation filter is applied to the first sub-pel position without affecting a pixel value of a full pixel of the reference picture.

10. The method for video data compression according to Claim 9,
    wherein in said motion compensating step, the filter coefficient of the second one-dimensional interpolation filter is applied to the second sub-pel position without affecting a pixel value of a full pixel of the reference picture and a pixel value of a sub pixel located at the first sub-pel position determined by the application of the filter coefficient of the first one-dimensional interpolation filter.

11. The method for video data compression according to Claim 7,
    wherein in said filter coefficient determining step, a filter coefficient of the two-dimensional adaptive interpolation filter is determined for each of sub-pel positions, the two-dimensional adaptive interpolation filter being specific for each of the sub-pel positions, and
    in said motion compensating step, a filter coefficient of the two-dimensional adaptive interpolation filter determined for a predetermined sub-pel position is applied to the predetermined sub-pel position so as to calculate a pixel value of a sub pixel to be interpolated at the predetermined sub-pel position.

12. The method for video data compression according to Claim 11,
    wherein the two-dimensional adaptive interpolation filter is separable into:

    a first one-dimensional interpolation filter used for calculating a pixel value of a sub pixel to be interpolated at a sub-pel position between pixels that are one-dimensionally arranged in a first direction, the first direction being one of a horizontal direction and a vertical direction; and
    a second one-dimensional interpolation filter used for calculating a pixel value of a sub pixel to be interpolated at a sub-pel position between pixels that are one-dimensionally arranged in a second direction, the second direction being one of the horizontal direction and the vertical direction other than the first direction,
    in said filter coefficient determining step, a filter coefficient of the first one-dimensional interpolation filter is determined for a first sub-pel position that is located at a sub-pel position in the first direction and at a full-pel position in the second direction, and
    in said motion compensating step, a pixel value of a sub pixel to be interpolated at the first sub-pel position is calculated by applying only the filter coefficient of the first one-dimensional interpolation filter to the first sub-pel position.

13. The method for video data compression according to Claim 11,
    wherein the two-dimensional adaptive interpolation filter is separable into:

    a first one-dimensional interpolation filter used for calculating a pixel value of a sub pixel to be interpolated at a sub-pel position between pixels that are one-dimensionally arranged in a first direction, the first direction being one of a horizontal direction and a vertical direction; and
    a second one-dimensional interpolation filter used for calculating a pixel value of a sub pixel to be interpolated at a sub-pel position between pixels that are one-dimensionally arranged in a second direction, the second direction being one of the horizontal direction and the vertical direction other than the first direction,
    in said filter coefficient determining step, a filter coefficient of the second one-dimensional interpolation filter is determined for a second sub-pel position that is located at a full-pel position in the first direction and at a sub-pel position in the second direction, and
    in said motion compensating step, a pixel value of a sub pixel to be interpolated at the second sub-pel position is calculated by applying only the filter coefficient of the second one-dimensional interpolation filter to the second sub-pel position.

**14.** The method for video data compression according to Claim 11,
wherein the two-dimensional adaptive interpolation filter is separable into:

a first one-dimensional interpolation filter used for calculating a pixel value of a sub pixel to be interpolated at a sub-pel position between pixels that are one-dimensionally arranged in a first direction, the first direction being one of a horizontal direction and a vertical direction; and
a second one-dimensional interpolation filter used for calculating a pixel value of a sub pixel to be interpolated at a sub-pel position between pixels that are one-dimensionally arranged in a second direction, the second direction being one of the horizontal direction and the vertical direction other than the first direction,
in said filter coefficient determining step, a filter coefficient of the second one-dimensional interpolation filter is determined for a third sub-pel position that is located at a sub-pel position in the first and second directions, and a filter coefficient of the first one-dimensional interpolation filter is determined for another sub-pel position, and
in said motion compensating step, a pixel value of a sub pixel to be interpolated at the third sub-pel position is calculated by applying the filter coefficient of the first one-dimensional interpolation filter to the other sub-pel position and applying the filter coefficient of the second one-dimensional interpolation filter to the third sub-pel position.

**15.** The method for video data compression according to Claim 7,
wherein in said filter coefficient determining step, a filter coefficient of each of sub-pel positions is determined in such a manner that a filter coefficient identical to a filter coefficient determined for a predetermined sub-pel position is determined for another sub-pel position that is horizontally or vertically symmetrical with the predetermined sub-pel position.

**16.** The method for video data compression according to Claim 7,
wherein a filter coefficient of the two-dimensional adaptive interpolation filter for a sub-pel position includes coefficients of plural pixels that horizontally or vertically sandwich the sub-pel position, and
in said filter coefficient determining step, a filter coefficient of the sub-pel position is determined in such a manner that a coefficient of a predetermined pixel among the plural pixels is identical to a coefficient of another pixel that is horizontally or vertically symmetrical with the predetermined pixel with respect to the sub-pel position.

**17.** The method for video data compression according to Claim 16,
wherein in said filter coefficient determining step, a filter coefficient of the sub-pel position is determined in such a manner that the coefficients of the plural pixels are horizontally or vertically symmetrical.

**18.** The method for video data compression according to Claim 7,
wherein in said filter coefficient determining step, a picture, a slice included in a picture, or a sequence including plural pictures is used as a unit of filter determination, and for each unit of filter determination, the filter coefficient of the two-dimensional adaptive interpolation filter for the sub-pel position included in the unit of filter determination is determined.

**19.** An apparatus which determines a filter coefficient of a two-dimensional adaptive interpolation filter used for calculating a pixel value of a sub pixel to be interpolated between full pixels in a two-dimensional array, based on pixel values of the full pixels, said apparatus comprising:

a motion estimation unit configured to estimate at sub-pel resolution, for each of blocks constituting a current picture, a motion of an image of the block from a reference picture as a motion vector;
an identification unit configured to identify at least one block having a motion vector specifying a sub-pel position on the reference picture from among the blocks having motion vectors with sub-pel resolution estimated by said motion estimation unit, the sub-pel position having a predetermined relative positional relationship with a neighboring full pixel; and
a determination unit configured to determine a filter coefficient of the sub-pel position based on an image of the at least one block of the current picture identified by said identification unit and an image of at least one block of the reference picture specified by the motion vector of the at least one block identified by said identification unit.

**20.** A program for determining a filter coefficient of a two-dimensional adaptive interpolation filter that is used for calculating a pixel value of a sub pixel to be interpolated between full pixels in a two-dimensional array, based on pixel values of the full pixels, said program causing a computer to execute:

a motion estimating step of estimating at sub-pel resolution, for each of blocks constituting a current picture, a motion of an image of the block from a reference picture as a motion vector;

an identifying step of identifying at least one block having a motion vector specifying a sub-pel position on the reference picture from among the blocks having motion vectors with sub-pel resolution estimated in the motion estimating step, the sub-pel position having a predetermined relative positional relationship with a neighboring full pixel; and

a determining step of determining a filter coefficient of the sub-pel position based on an image of the at least one block identified in the identifying step and an image of at least one block of the reference picture specified by the motion vector of the at least one block identified in the identifying step.

**21.** An integrated circuit which determines a filter coefficient of a two-dimensional adaptive interpolation filter used for calculating a pixel value of a sub pixel to be interpolated between full pixels in a two-dimensional array, based on pixel values of the full pixels, said integrated circuit comprising:

a motion estimation unit configured to estimate at sub-pel resolution, for each of blocks constituting a current picture, a motion of an image of the block from a reference picture as a motion vector;

an identification unit configured to identify at least one block having a motion vector specifying a sub-pel position on the reference picture from among the blocks having motion vectors with sub-pel resolution estimated by said motion estimation unit, the sub-pel position having a predetermined relative positional relationship with a neighboring full pixel; and

a determination unit configured to determine a filter coefficient of the sub-pel position based on an image of the at least one block of the current picture identified by said identification unit and an image of at least one block of the reference picture specified by the motion vector of the at least one block identified by said identification unit.

# FIG. 1

Input signal → (310) ⊕ → Prediction error → Transformation and quantization unit (320) → Quantized coefficients → Entropy coding unit (390) → Coded signal

Prediction signal

Inverse quantization and inverse transformation unit (330) → ⊕ (335)

Deblocking filter (337)

Intra prediction unit (350)

Memory (340)

Motion compensated prediction unit (360)

380 — Intra/Inter

Motion estimation unit (370)

Motion vector

300

EP 2 141 931 A1

# FIG. 2

FIG. 3

EP 2 141 931 A1

# FIG. 4

Sub-pel positions for
which filter coefficients
are to be calculated

(p, q) = (1, 0)
(2, 0)
(3, 0)
(0, 1)
(0, 2)
(0, 3)
(1, 1)
(1, 2)
(1, 3)
(2, 1)
(2, 2)
(2, 3)
(3, 1)
(3, 2)
(3, 3)

EP 2 141 931 A1

FIG. 5B

$h^{(q)}$

$h_{-2}^{(q)}$  $h_{-1}^{(q)}$  $h_0^{(q)}$  $h_1^{(q)}$  $h_2^{(q)}$  $h_3^{(q)}$

(0, q)

FIG. 5A

(p, 0)

$g_{-2}^{(p)}$  $g_{-1}^{(p)}$  $g_0^{(p)}$  $g_1^{(p)}$  $g_2^{(p)}$  $g_3^{(p)}$

$g^{(p)}$

## FIG. 6

Sub-full-pel positions

Full-sub-pel positions

Sub-sub-pel positions

(p,q) = (0,0) Full-pel positions

EP 2 141 931 A1

FIG. 7

EP 2 141 931 A1

# FIG. 8

Start

S100
Detect motion vector at sub-pel resolution

S102
Identify block having motion vector specifying sub-full-pel position

S104
Calculate filter coefficient of sub-full-pel position using identified block

S106
Another sub-full-pel position?

Y

N

S108
Identify block having motion vector specifying full-sub-pel position

S110
Calculate filter coefficient of full-sub-pel position using identified block

S112
Another full-sub-pel position?

Y

N

S114
Identify block having motion vector specifying sub-sub-pel position

S116
Calculate filter coefficient of sub-sub-pel position using identified block

S118
Another sub-sub-pel position?

Y

N

S200
Motion compensation using motion vector and filter coefficients

End

FIG. 9

EP 2 141 931 A1

FIG. 10

EP 2 141 931 A1

FIG. 11

EP 2 141 931 A1

FIG. 12

## FIG. 13A

Coding efficiency

## FIG. 13B

Coding efficiency

# FIG. 14

Number of calculations

<table>
<tr><td colspan="2">**INTERNATIONAL SEARCH REPORT**</td><td colspan="2">International application No.<br>PCT/JP2008/001034</td></tr>
</table>

| | |
|---|---|
| **A. CLASSIFICATION OF SUBJECT MATTER**<br>*H04N7/32*(2006.01)i | |

According to International Patent Classification (IPC) or to both national classification and IPC

**B. FIELDS SEARCHED**

Minimum documentation searched (classification system followed by classification symbols)
*H04N7/26-7/68*

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2004-147328 A (Docomo Communications Laboratories U.S.A. Inc.),<br>20 May, 2004 (20.05.04),<br>Full text; all drawings<br>& US 2004/0076333 A1 | 1-21 |
| A | JP 2003-319398 A (NEC Corp.),<br>07 November, 2003 (07.11.03),<br>Full text; all drawings<br>& US 2005/0105617 A1     & EP 1499134 A1<br>& WO 2003/092300 A1 | 1-21 |

| ☒ Further documents are listed in the continuation of Box C. | ☐ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>16 July, 2008 (16.07.08) | Date of mailing of the international search report<br>29 July, 2008 (29.07.08) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

| International application No. |
| --- |
| PCT/JP2008/001034 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | Hideaki KIMATA et al., "Block Base Tekio Naiso Filter Shuho o Tekiyo shita 3-Jigen Tekio Ugoki Vector Fugoka", 3D Adaptive Motion Vector Coding Integrated with Block Base Adaptive Interpolation Filter, The Transactions of the Institute of Electronics, Information and Communication Engineers D-II, 2003.11, Vol.J86-D-II, No.11, pages 1586 to 1596 | 1-21 |
| A | Thomas Wedi, Advanced Motion Compensated Prediction Methods, ITU-T Video Coding Experts Group (ITU-T SG16 Q.6) 24th Meeting, VCEG-X10, 2003.10 | 1-21 |

Form PCT/ISA/210 (continuation of second sheet) (April 2007)